(19) Europäisches Patentamt
European Patent Office
Office européen des brevets

(11) **EP 4 451 001 B1**

(12) **EUROPEAN PATENT SPECIFICATION**

(45) Date of publication and mention
of the grant of the patent:
**24.06.2026 Bulletin 2026/26**

(21) Application number: **23169255.9**

(22) Date of filing: **21.04.2023**

(51) International Patent Classification (IPC):
**G01S 7/03** (2006.01)        **G01S 7/35** (2006.01)
**G01S 7/40** (2006.01)        **G01S 13/34** (2006.01)

(52) Cooperative Patent Classification (CPC):
**G01S 13/343; G01S 7/038; G01S 7/354; G01S 7/4004**

(54) **APPARATUS, RADAR SYSTEM, ELECTRONIC DEVICE AND METHOD**

VORRICHTUNG, RADARSYSTEM, ELEKTRONISCHE VORRICHTUNG UND VERFAHREN

APPAREIL, SYSTÈME RADAR, DISPOSITIF ÉLECTRONIQUE ET PROCÉDÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**23.10.2024 Bulletin 2024/43**

(73) Proprietor: **Infineon Technologies AG
85579 Neubiberg (DE)**

(72) Inventor: **MELNIKOV, Alexandr
Hong Kong (HK)**

(74) Representative: **2SPL Patentanwälte PartG mbB
Landaubogen 3a
81373 München (DE)**

(56) References cited:
**US-A1- 2021 072 345       US-A1- 2021 373 127
US-A1- 2022 196 795**

**Description**

**Field**

The present disclosure relates to radar signal processing.

**Background**

Crosstalk (e.g., between transmit and receive antennas) and near-range obstacles (e.g., a casing) may result in undesired signal components appearing in an intermediate frequency (IF) signal of a radar sensor, which in turn can lead to erroneous detection and tracking of objects.

Patent document US 2022/196795 A1 proposes a radar system utilizing a linear chirp that can achieve a larger MIMO virtual array than traditional systems. Transmit channels transmit distinct chirp signals in an overlapped fashion such that the pulse repetition interval is kept short and the frame is kept short. This alleviates range migration and aids in achieving a high frame update rate. The chirp signals from differing transmitters can be separated on receive in the range spectrum domain, such that a MIMO virtual array construction is possible. Distinct chirps are delayed versions of the first chirp signal. Chirps overlap in the fast-time domain, but due to delay, there is separation in the range spectrum domain. When the delay is at least the instrument round-trip delay, transmitters are separable. Further, the wavelengths are identical across transmitters such that there is no residual-range versus angle ambiguity issue present in the claimed frequency-offset modulation range division MIMO system.

Patent document US 2021/072345 A1 proposes method and systems for object detection using a radar module. Frames of range and doppler data are received from a radar module at sample time intervals. Doppler zero slice data is extracted from a current frame of the range and doppler data. A prediction of doppler zero slice data is maintained. The prediction of doppler zero slice data is based at least partly on doppler zero slice data from a previous frame of range and doppler data. Standard deviation data is determined based at least partly on prediction error data. The prediction error data relates to a difference between the prediction of doppler zero slice data and the doppler zero slice data. An object detection output is determined based on a comparison of the standard deviation data and an object detection threshold. Patent document US 2021/373127 A1 proposes methods, systems, computer-readable media, and apparatuses for determining one or more attributes of at least one target based on eigenspace analysis of radar signals. In some embodiments, a subset of eigenvectors to use for forming a signal or noise subspace is identified based on principal component analysis. In some embodiments, the subset of eigenvectors is identified based on estimating the total number of targets using a discrete Fourier transform (DFT) or other spectral analysis technique. In some embodiments, a DFT is used to identify areas of interest in which to perform eigenspace analysis. In some embodiments, a DFT is used to estimate one attribute of a target, and eigenspace analysis is performed to estimate a different attribute of the target, with the results being combined to generate a multi-dimensional representation of a field of view.

Hence, there may be a demand for improved radar signal processing.

**Summary**

The demand is satisfied by the subject matter of the independent claims. Further beneficial embodiments are given by the dependent claims.

The invention relates to an apparatus, comprising processing circuitry configured to determine a harmonic spectrum of an intermediate frequency (IF) signal of a radar sensor, determine an undesired signal component of the IF signal caused by at least one of a crosstalk of the radar sensor and a near-range obstacle in a field of view of the radar sensor based on the harmonic spectrum, and determine a calibrated signal having a reduced contribution from the undesired signal component based on the undesired signal component and the IF signal.

The invention further relates to a radar system, comprising the above apparatus, and the radar sensor, wherein the radar sensor is configured to emit a radio frequency signal into the field of view of the radar sensor and generate the IF signal based on a reflection of the radio frequency signal.

The invention further relates to an electronic device, comprising the above radar system, and control circuitry configured to control an operation of the electronic device based on the calibrated signal.

Finally, the invention further relates to a method, comprising determining a harmonic spectrum of an IF signal of a radar sensor, determining an undesired signal component of the IF signal caused by at least one of a crosstalk of the radar sensor and a near-range obstacle in a field of view of the radar sensor based on the harmonic spectrum, and determining a calibrated signal having a reduced contribution from the undesired signal component based on the undesired signal component and the IF signal.

## EP 4 451 001 B1

### Brief description of the Figures

Some examples of apparatuses and/or methods will be described in the following by way of example only, and with reference to the accompanying figures, in which

Fig. 1 illustrates an apparatus according to the invention;

Fig. 2a and Fig. 2b illustrate a diagram of a time-domain representation and a range representation of an example of an IF signal of a radar sensor, respectively;

Fig. 3 illustrates an example of an eigenvector matrix of an IF signal of a radar sensor;

Fig. 4 illustrates an example of a noise subspace derived from a correlation matrix of an IF signal of a radar sensor;

Fig. 5 illustrates a complex plane including examples of roots of a minimum-norm vector of an IF signal of a radar sensor;

Fig. 6a and Fig. 6b illustrate a diagram of a time-domain representation and a range representation of an example of an IF signal of a radar sensor, respectively;

Figs. 7a to 7c illustrate a complex plane with examples of different root locations of roots of a minimum-norm vector of an IF signal of a radar sensor;

Figs. 8a to 8f illustrate a diagram of examples of a calibrated signal;

Fig. 9 illustrates a diagram of an example of a drift of an undesired signal component over time;

Fig. 10a and Fig. 10b illustrate a diagram of a time-domain representation and a range representation of a calibrated signal, respectively;

Fig. 11 illustrates a radar system according to the invention;

Fig. 12 illustrates an electronic device according to the invention;

Fig. 13 illustrates a method according to the invention;

Fig. 14 illustrates another example of a method; and

Fig. 15 illustrates another example of a method.

### Detailed Description

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

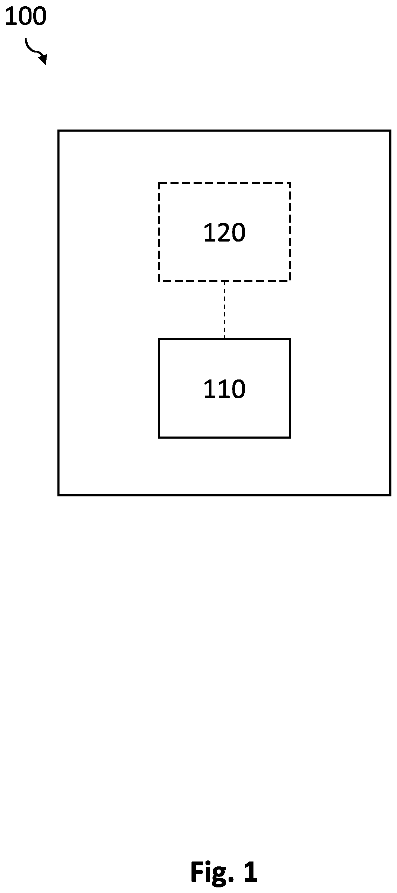

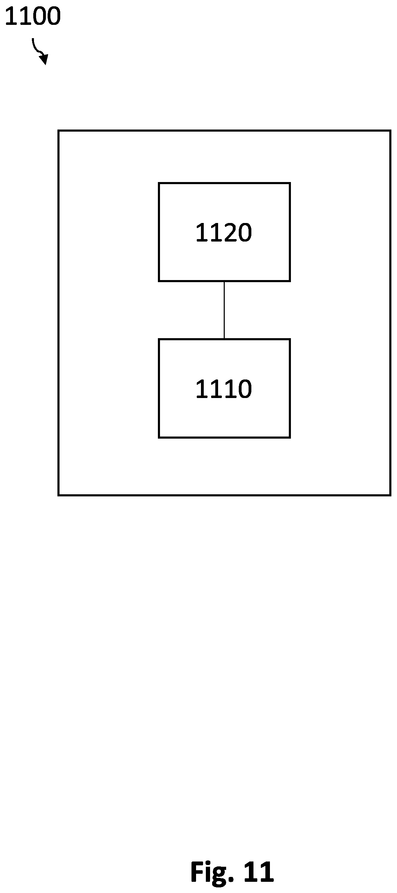

**Fig. 1** illustrates a block diagram of an apparatus 100. The apparatus 100 is to be considered in the context of a radar sensor. For instance, the apparatus 100 may be integrated into a radar system comprising the radar sensor such as explained below with reference to Fig. 11 or may be external to the radar system. In the former case, the apparatus 100 may be external to or (e.g., partially or fully) integrated into the radar sensor.

The apparatus 100 comprises processing circuitry 110 and, optionally, interface circuitry 120. In case interface circuitry 120 is present, the interface circuitry 120 may be communicatively coupled (e.g., via a wired or wireless connection) to the processing circuitry 110, e.g., for data exchange between the interface circuitry 120 and the processing circuitry 110.

The interface circuitry 120 may be any device or means for communicating or exchanging data. In case the apparatus 100 comprises the interface circuitry 120, the interface circuitry 120 may be configured to receive data indicating an IF signal of the radar sensor. For instance, the interface circuitry 120 may be communicatively coupled to the radar sensor or to a storage device storing the data. The interface circuitry 120 may receive the data, e.g., via a wired or wireless coupling to the radar sensor or the storage device.

Depending on the specific implementation, the apparatus 100 may dispense with the interface circuitry 120: For example, the processing circuitry 110 may determine said data. For instance, the processing circuitry 110 may be integrated into the radar sensor. The radar sensor may be configured to emit a radio frequency signal into the field of view of the radar sensor and generate the IF signal based on a reflection of the radio frequency signal. The IF signal may be any type of signal that is generated in a receiver of the radar sensor. The IF signal may, e.g., be created by mixing the reflection with a local oscillator signal at a specific frequency. The processing circuitry 110 may determine data indicating the IF signal by, e.g., sampling the IF signal and perform further processing of the data within the radar sensor. The processing circuitry 110 may optionally modify the sampled IF signal in a pre-processing step, e.g., for noise-reduction, DC-removal (direct current) or alike. For instance, the apparatus 100 may comprise memory configured to store the determined data.

Alternatively, the processing circuitry 110 may partially determine the data. For instance, the processing circuitry 110 may determine a first part of the data, whereas at least one external processing circuitry may determine at least one second part of the data. The processing circuitry 110 and the external processing circuitry may, e.g., be connected within a distributed computing environment for jointly determining the data. In this case, the processing circuitry may either be integrated into the radar sensor or may be external to the radar sensor. The processing circuitry 110 may receive the second part of the data, e.g., via an interface to the external processing circuitry such as interface circuitry 120, and further process the first and the second part of the data, as described below.

In another alternative, the processing circuitry 110 is partially integrated into the radar sensor and is partially external to the radar sensor. In such cases, the interface circuitry 120 is optional. The processing circuitry 110 may, for instance, comprise a first part (first processing circuitry) which is integrated into the radar sensor and a second part (second processing circuitry) which is external to the radar sensor. In this case, the determination of the data and/or further processing, as described below, may be performed by the first and second part of the processing circuitry 110 in a distributed manner.

The processing circuitry 110 may be, e.g., a single dedicated processor, a single shared processor, or a plurality of individual processors, some of which or all of which may be shared, a digital signal processor (DSP) hardware, an application specific integrated circuit (ASIC), a microcontroller or a field programmable gate array (FPGA). The processing circuitry 110 may optionally be coupled to, e.g., read only memory (ROM) for storing software, random access memory (RAM) and/or non-volatile memory.

The processing circuitry 110 is configured to determine a harmonic spectrum of the IF signal of the radar sensor and determine an undesired signal component of the IF signal caused by at least one of a crosstalk of the radar sensor and a near-range obstacle in a field of view of the radar sensor based on the harmonic spectrum. For instance, the processing circuitry 110 may determine the undesired signal component based on a frequency estimation technique using a harmonic model.

The harmonic spectrum may refer to power signals, having line (or discrete) spectra, consisting of linear combination of complex exponentials with harmonically related frequencies, i.e., periodic signals. Harmonic model may refer to a class of a Pole-Zero models with complex-conjugate unit poles, i.e., a model suitable for modelling periodic signals with undamped amplitudes, e.g., spectral components of the IF radar signal.

The processing circuitry 110 may determine the harmonic spectrum based on any spectral analysis method. For example, the processing circuitry 110 may be configured to determine the harmonic spectrum based on an eigendecomposition of the IF signal, e.g., based on an eigendecomposition of an (auto) correlation or covariance matrix of the IF signal. For instance, an eigendecomposition may decompose the IF signal's matrix into its eigenvalues and eigenvectors. The eigendecomposed IF signal may, for instance, indicate measures of statistical properties of the IF signal. The eigenvectors may represent, for instance, a frequency vector corresponding to an intelligent and/or a noise signal in the IF signal, whereas a corresponding eigenvalue may represent a power of said frequency vector. Eigendecompositionbased methods may be advantageous since they may exhibit high robustness to noise and interference compared to other methods, such as Fourier analysis. This may be due to the eigendecomposition being based on statistical properties of the IF signal. Further, the eigendecomposition-based methods may provide the ability to handle non-stationary signals and to identify multiple harmonics with low computational complexity.

The crosstalk, e.g., a Tx-Rx-crosstalk (leakage), or interference may refer to an unwanted coupling of energy from one signal path of the radar sensor to another. Crosstalk may occur between different channels within a radar sensor, or between multiple radar sensors operating in close proximity. The near-range obstacle may refer to any, e.g., static, obstacle, such as a housing or case of the radar sensor, in a proximity or near range of a receiver of the radar sensor. The near range may refer to a range which is potentially affected by crosstalk. For example, in case of a 60 GHz (Gigahertz) radar sensor, the near-range obstacle may have a proximity of less than 40, 20 or 1 cm (centimeters) to the receiver. Both, the crosstalk as well as a near-range obstacle may undesirably distort the IF signal, for example, it may decrease the detection accuracy of the radar sensor, introduce false near-range targets into the IF signal and/or mask actual near-range targets. A radar sensor suffering from Tx-Rx leakage, or an undesired near-range obstacle may complicate, for instance, detection of a static target closer than approximately 40 cm. The apparatus 100 may provide a technique to overcome such shortcomings.

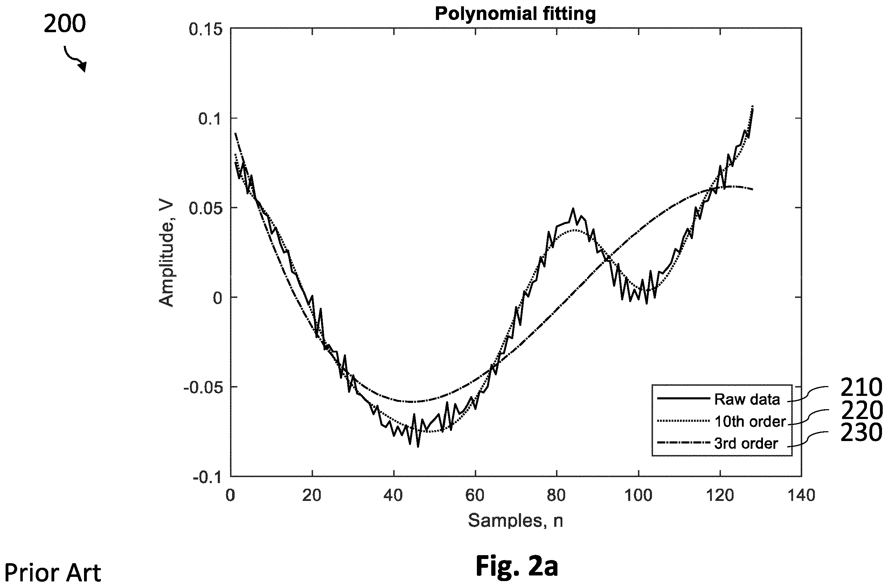

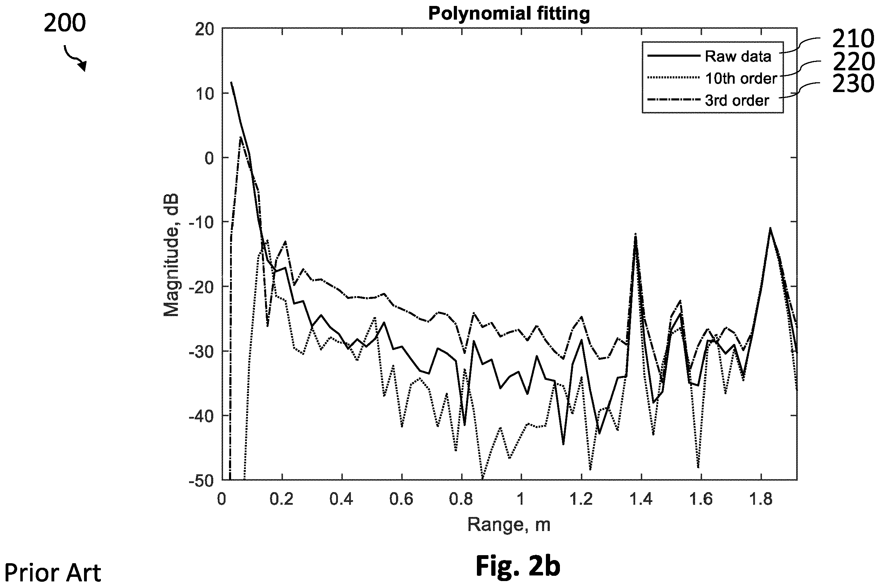

Conventionally, crosstalk may be determined based on a low-order, e.g., least-squares, polynomial fit to the IF signal or raw ADC (analog-to-digital converted) data in order to detect the shape of a profile of the leakage. However, such conventional approaches may highly rely on this initial polynomial fitting and may suffer from poor fitting or over-fitting. For example, assuming a complex shape of the leakage profile with an increasing complexity in case of a near-range obstacle such as a sensor casing being present, the low order polynomial fit may provide an insufficient estimation of the leakage profile and hence may fail to reduce its effect on the near-range bins of the IF signal. High-order polynomial fit, on the other hand, may fit into a potential near-range target and suppress it, acting as a high-pass filter (HPF). The latter is illustrated by **Fig. 2a** and **Fig. 2b** showing a diagram 200 of a time-domain representation and a range representation of an example of an IF signal 210 of a radar sensor, respectively. The diagrams 200 further illustrate an example of a $10^{th}$ order polynomial fit 220 and a $3^{rd}$ order polynomial fit 230 to the IF signal 210 in the time-domain and the range representation, respectively. The $10^{th}$ order polynomial fit 220 exhibits an HPF-effect, thus, may be an over-fitting whereas the $3^{rd}$ order polynomial fit 230 is a poor fit, thus, residual leakage may dominate the near-range of the radar sensor.

By contrast, the harmonics-based approach of the apparatus 100 may successfully remove a near-range obstacle from the IF signal (radar sensor's field of view) and at the same time enable a confident near-range (e.g., less than 40 cm) target detection. This may be due to (e.g., complex) exponentials present in the IF signals contained in white noise for which a sinusoidal or harmonic model may be more accurate. The use of the harmonic spectrum may provide the ability to resolve (complex) exponentials closely spaced in frequency and may therefore lead to a super-resolution determination of the undesired signal component.

In the following, details are given on examples of how the harmonic spectrum may be determined:
The processing circuitry 110 may be configured to determine the harmonic spectrum, e.g., based on a harmonic model of the IF signal. The harmonic model may be a model that represents the IF signal as a sum of harmonic components, e.g., sine and cosine waves with frequencies that are integer multiples of a reference frequency.

In some examples, the processing circuitry 110 may be configured to determine the harmonic spectrum by partitioning the IF signal into a signal subspace and a noise subspace (based on a signal-noise subspace decomposition). For instance, the processing circuitry 110 may determine the undesired signal component based on at least one noise eigenvector of the IF signal, whereas the noise eigenvector may be found by partitioning the IF signal into the subspaces. This may allow modelling the IF signal as a combination of a (e.g., deterministic) signal and a (e.g., stochastic) noise signal. For instance, the processing circuitry 110 may determine the undesired signal component within the noise subspace which may increase the accuracy of the crosstalk/obstacle detection.

The processing circuitry 110 may, for instance, be configured to determine the harmonic spectrum based on at least one of an eigendecomposition of an autocorrelation matrix of the IF signal and a singular value decomposition of a data matrix of the IF signal. For instance, the above-mentioned partitioning into noise and signal subspace may be realized by the eigendecomposition and/or on the singular value decomposition.

The eigendecomposition may be a diagonalization of the autocorrelation matrix which decomposes said matrix into eigenvectors and eigenvalues. Eigendecomposition may involve finding the eigenvectors and eigenvalues of the matrix and using them to factorize it. The singular value decomposition may be performed by, e.g., forming a data matrix from the IF signal, where each column of the data matrix represents a time instant of IF signal samples, performing the singular value decomposition on the data matrix to obtain the left singular vectors and the singular values of the data matrix, and using the left singular vectors to form the signal subspace and the noise subspace. The signal subspace may comprise the eigenvectors (singular vectors) associated with the largest eigenvalues (singular values), while the noise subspace may comprise the (noise-) eigenvectors (singular vectors) associated with the smallest eigenvalues (singular values). The IF signal may be projected on the signal subspace and/or onto the noise subspace to obtain the harmonic components of the signal.

The processing circuitry 110 may, for example, be configured to determine the harmonic spectrum by determining a pseudo-spectrum and/or a rooted representation of a pseudo-spectrum (i.e., a rooted counterpart of the pseudo-spectrum determination) of a harmonic model (harmonic-based signal model) of the IF signal. The processing circuitry 110 may determine the pseudo-spectrum based on a Fourier transform of individual and/or an assembly of the noise-eigenvectors (e.g., obtained from a signal to noise partition). The processing circuitry 110 may determine the rooted representation of the pseudo-spectrum based on a z-transform of the noise-eigenvectors (associated with the noise subspace).

For instance, the processing circuitry 110 may determine the harmonic spectrum using at least one of a minimum-norm based method (e.g., a minimum-norm method and/or a minimum-norm root method), a multiple signal classification (MUSIC) based method (e.g., a multiple signal classification method and/or a multiple signal classification root method), an eigenvalue based method (e.g., an eigenvalue method and/or a rooted eigenvalue method), a Pisarenko harmonic decomposition based method (e.g., a Pisarenko harmonic decomposition method and/or a rooted Pisarenko harmonic decomposition method), and an estimation of signal parameters via rotational invariance technique (ESPRIT). The latter may be a singular value decomposition technique, whereas the other methods may be eigendecomposition based techniques. These methods may be used to determine at least one noise eigenvector of the IF signal. For instance, the Pisarenko based methods may use a single noise eigenvector which makes it faster, but less robust. The MUSIC based methods may use all noise eigenvectors to calculate individual pseudospectra or roots of the z-transformed noise eigenvectors' polynomials. The final result may be the average of individual pseudospectra/polynomials. The MUSIC based methods may increase robustness due to averaging but may be more computationally intense. The eigenvalue-based methods may be similar to MUSIC, with the difference that individual noise eigenvectors are normalized with their respective eigenvalues. They may exhibit higher robustness than MUSIC in case that the noise is not white or the amount of data is limited. The minimum-norm based method may determine a pseudo-spectrum by finding a minimum-norm vector, which efficiently represents the assembly of the noise eigenvectors. They may be less intense computationally-wise, but less robust than MUSIC or eigenvalue-based methods.

In the following, the minimum-norm based methods may be explained in more detail. However, this is to be understood as an example which may be preferred in target applications aiming for computational efficiency. The alternative methods described herein as well as other methods for determining noise eigenvectors may be likewise used for determining the undesired signal component. The minimum-norm based methods in some concrete embodiments described herein may be understood interchangeable with or transferable to these alternative methods.

The minimum-norm method may be based on an estimation of a spectrum of a signal source in the IF signal in the presence of additive noise. The signal source may be a signal component of the IF signal caused by actual power transmission, e.g., due to a potential target, crosstalk or near-range obstacles, thus, not due to noise. The minimum-norm method may further be based on the assumption that the eigenvectors of the Hermitian symmetric autocorrelation matrix, formed using the IF signal vector, are orthogonal to each other and hence are the signal and noise eigenvectors. The processing circuitry 110 may, for example, estimate the signal source's spectrum by finding a projection of the IF signal onto the two subspaces spanned by the signal and noise eigenvectors. This may be done by forming Hermitian symmetric correlation matrix and dividing it to the signal and noise subspace after eigendecomposition. A result of the latter operation may be a vector, representing the noise subspace and being orthogonal and having its norm minimized with respect to the signal subspace. The use of the minimum-norm method may provide computational simplicity and ease of implementation.

For example, the processing circuitry 110 may determine an autocorrelation matrix of the IF signal. The latter may, e.g., be done similarly to when using a Capon MVDR (minimum variance distortionless response) method. The autocorrelation matrix $\mathbf{R}_x$ may be written in terms of its eigendecomposition according to Equation 1:

$$\mathbf{R}_x = \sum_{m=1}^{M} \lambda_m \mathbf{q}_m \mathbf{q}_m^H = \mathbf{Q} \Lambda \mathbf{Q}^H$$

Equation 1, where $\lambda_m$ are eigenvalues of the autocorrelation matrix in descending order m, $q_m$ are the corresponding eigenvectors, $\Lambda$ is a diagonal matrix with the eigenvalues in descending order on the diagonal, the columns of Q are the corresponding eigenvectors.

The processing circuitry 110 may then determine an eigendecomposition of the autocorrelation matrix, resulting in eigenvalues that are due to one or more signal sources and remaining eigenvalues that are due to noise only. The former may be written as the sum of the signal power in time and noise as per Equation 2:

$$\lambda_m = M|\alpha_m|^2 + \sigma_w^2$$

for

$$m \leq P$$

Equation 2, where M refers to a predefined time window of length M in which the IF signal is observe, P is the number of exponentials, $\alpha_m$ is a magnitude of the signal component and $\sigma_w^2$ is a noise power in the time window M (e.g., of white noise).

The remaining eigenvalues may be defined as per Equation 3:

$$\lambda_m = \sigma_w^2$$

Equation 3

for

$$m > P$$

The processing circuitry 110 may further be configured to determine the harmonic spectrum based on a noise subspace of the IF signal. For instance, the processing circuitry 110 may be configured to determine the noise subspace by associating at least one eigenvalue of an autocorrelation matrix of the IF signal to the noise subspace. The P largest eigenvalues of the autocorrelation matrix of Equation 1 may correspond to the signal made up of exponentials and remaining eigenvalues may have an equal value and correspond to noise. Thus, the processing circuitry 110 may partition the correlation matrix into portions due to the signal (signal subspace) and noise (noise subspace). An example of an eigendecomposed representation of the (auto) correlation matrix is defined by Equation 4:

$$\mathbf{R}_x = \sum_{m=1}^{P} (M|\alpha_m|^2 + \sigma_w^2)\mathbf{q}_m\mathbf{q}_m^H + \sum_{m=P+1}^{M} \sigma_w^2 \mathbf{q}_m\mathbf{q}_m^H$$

$$= \mathbf{Q}_s \mathbf{\Lambda}_s \mathbf{Q}_s^H + \sigma_w^2 \mathbf{Q}_w \mathbf{Q}_w^H$$

Equation 4, where $\mathbf{Q}_s$ and $\mathbf{Q}_w$ are matrices whose columns comprise signal and noise eigenvectors, respectively. The matrix $\Lambda_s$ is a P × P diagonal matrix comprising signal eigenvalues from Equation 2. Thus, the M-dimensional subspace comprising the observations of a time-window signal vector may be split into two subspaces spanned by the signal and noise eigenvectors, respectively. These two subspaces may be orthogonal to each other, e.g., due to the (auto) correlation matrix being Hermitian symmetric.

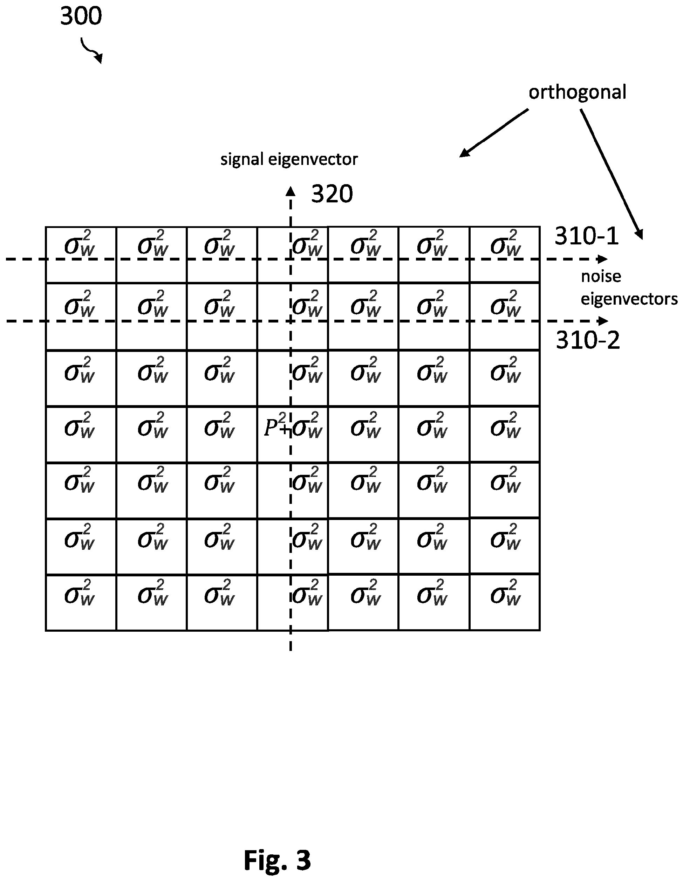

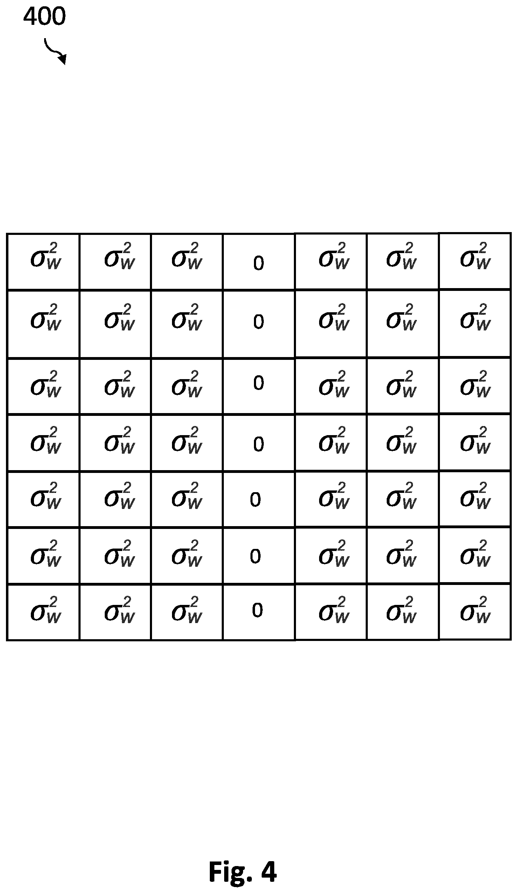

The orthogonality of the signal and noise eigenvectors is schematically illustrated by **Fig. 3.** Fig. 3 shows an example of an eigenvector matrix 300 as output of an eigendecomposition of an autocorrelation matrix of an IF signal. The eigenvector matrix 300 is formed by noise eigenvectors, such as noise eigenvectors 310-1 and 310-2, of $\sigma_w^2$ values which - as schematically depicted by Fig. 3 - are arranged orthogonally to signal eigenvectors, such as signal eigenvector 320, including at least one element with a P value corresponding to the signal's power. It is to be noted that the eigenvector matrix 300 shown in Fig. 3 is to be understood as a mere example to visualize the orthogonality of the signal and noise eigenvectors. In other examples, an eigenvector matrix of an IF signal may have a different size or have different entries than the example of Fig. 3. **Fig. 4** illustrates an example of a noise subspace 400 (noise eigenvector matrix) retrieved from the eigenvector matrix 300 of Fig. 3 where the signal eigenvector 320 is nulled as a result of moving the signal eigenvector 320 to a signal subspace of the IF signal. The signal subspace may, e.g., be discarded. The processing circuitry 110 may then determine a spectrum of the noise subspace 400, e.g., by applying a fast Fourier transform (FFT) to the noise eigenvector matrix. The processing circuitry 110 may determine the signal component's frequency by determining (locating) a peak in the spectrum of the noise subspace 400.

For example, the processing circuitry 110 may determine a minimum-norm vector $\mathbf{u}_{mn}$ from vectors lying in the noise subspace. For instance, the processing circuitry 110 may determine the minimum-norm vector by solving a constrained minimization problem, such as given by Equation 5:

$$\min \|\mathbf{u}\|^2 = \mathbf{u}^H \mathbf{P}_w \mathbf{u}$$

subject to

$$\delta_1^H \mathbf{u} = 1$$

Equation 5, where an example of a constraint is that the first element of u must be non-zero, e.g., equal to 1, $P_w$ is a projection onto the noise subspace $\mathbf{Q}_w\mathbf{Q}_w^H$.

A solution to the constrained minimization problem may be found by using Lagrange multipliers, for instance. The processing circuitry 110 may then determine a pseudospectrum minimum-norm vector based on the noise subspace. An example of a pseudospectrum $\mathbf{R}_{mn}$ is given by Equation 6:

$$\bar{R}_{\mathrm{mn}}(e^{j2\pi f}) = \frac{1}{|\mathbf{v}^H(f)\mathbf{u}_{mn}|^2}$$

Equation 6, where $\mathbf{v}^H(f)$ denotes a frequency vector (of an eigenvector), $\mathbf{u}_{mn}$ the minimum-norm vector, and where the operation in the denominator of Equation 6 is essentially a Fourier transform. A frequency estimate of the signal component may then be obtained from the peaks in the pseudospectrum.

As an alternative, the processing circuitry 110 may determine the harmonic spectrum based on the minimum-norm root method, thus, determine at least one root of the (e.g., complex polynomial) minimum-norm vector. The minimum-norm root method may be a variant of the minimum-norm method that provides an estimation of frequencies of sinusoidal components of a signal source in the IF signal by finding roots of a polynomial that may be constructed from the minimum-norm vector $u_{mn}$ as described above. The minimum-norm root method may provide a zero-pole representation of the harmonic spectrum (estimate) and may be more efficient computationally, compared to Fourier transform calculations of the minimum-norm vector $u_{mn}$. It may provide an increased visual discrimination of closely spaced targets and signal sources. It may therefore simplify spectral analysis of the undesired signal components.

Since the computational effort may be higher than that of the minimum-norm method, the minimum-norm root method may be exclusively used during calibration (i.e., the use of the minimum-norm root method might be restricted to the calibration process only) whereas during operation the results (e.g., a leakage profile) from the calibration may be used and, optionally, updating of these results may be based on other methods such as the minimum-norm method. Therefore, in some examples, the processing circuitry 110 may be configured to, in a calibration mode of the apparatus 100, determine the harmonic spectrum of the IF signal based on the minimum-norm root method. Further details of the implementation of the minimum-norm root method to determine the undesired signal component are explained further below.

The method for determining the harmonic spectrum may be chosen depending on the requirements and circumstances of a specific target application. For instance, an alternative may be the use of a MUSIC method. This method may estimate the frequencies of sinusoidal components in the IF signal by exploiting the subspace structure of the noise to distinguish between signal and noise components, similarly to what has been demonstrated for the minimum-norm method above. The MUSIC method may be used to improve the accuracy of the pseudo-spectrum calculations, by further reduction of the spurious spectral peaks due to averaging of multiple pseudo-spectra, computed for the individual noise eigenvectors.. An alternative to the MUSIC method is the MUSIC root method which is based on finding roots of a polynomial that is constructed from the noise subspace.

Alternatively, an eigenvalue method may be used. The processing circuitry 110 may, for instance, estimate frequencies of sinusoidal components of a signal source by finding eigenvectors of the autocovariance matrix. A variant of the eigenvalue method is the rooted eigenvalue method which is based on the estimation of the frequencies of sinusoidal components of a signal source by finding roots of a polynomial that is constructed from the eigenvalues of the IF signal. A fundamental difference of the eigenvector method, compared to MUSIC, may be that the individual pseudospectra, calculated from each eigenvector, are normalized with respect to their corresponding eigenvalues. This results in greater spectrum estimation accuracy if the noise is not white or only limited amount of data is available for constructing autocorrelation matrix.

Another method for determining the harmonic spectrum is the Pisarenko harmonic decomposition method. For instance, the processing circuitry 110 may estimate frequencies and amplitudes of sinusoidal components of a signal source by solving a linear system of equations that is constructed from the autocorrelation matrix of the IF signal. The Pisarenko harmonic decomposition method may provide information about the power of the signal sources, included in the IF signal.

Further, the ESPRIT method may be used for determining the harmonic spectrum. The ESPRIT method may be based on the principle of rotational invariance of signal subspaces. It may be based on a rotational property of staggered subspaces of the IF signal to generate the harmonic spectrum (frequency estimates) of the IF signal. In the case the IF signal comprises a discrete-time signal or time series, this property may rely on observations of the signal over two identical intervals staggered in time. By computing the singular value decomposition of these matrices and using their left singular vectors, a noise and a signal subspace may be obtained. The subspaces may correspond to the frequency components of the IF signal, and their intersection may provide an estimate of the frequency parameters. The ESPRIT method may be a non-iterative method that is computationally efficient and particularly useful for estimating the frequencies of closely spaced sinusoidal signals.

In the following, details are given on examples of how the undesired signal component may be determined: The determination of the undesired signal component may, for instance, depend on free-space measurements. A free-space measurement may be a measurement performed by the radar sensor where the radio frequency signal propagates through free space at least in the near range, without any obstructions or reflections, or where the radio frequency signal has no other obstacle than the near-range obstacle at least in the near range. Such a free-space measurement may be a snapshot of the radar sensing recorded in the IF signal, e.g., as at least one frame of the IF signal. The free-space measurements may increase the accuracy of a calibration of the radar sensor and simplify the calibration. Alternatively to the free-space measurement, a known scenario may be given for determining the undesired signal component, or long-term observations may be performed to retrieve the undesired signal component.

In case of using free-space measurements, the processing circuitry 110 may be configured to determine whether at least one frame of the IF signal indicates a free-space measurement based on the harmonic spectrum and determine the undesired signal component based on the free-space measurement. For instance, in case a root-based method such as minimum-norm root method is used, the processing circuitry 110 may be configured to determine whether the at least one frame indicates a free-space measurement based by determining one or more roots (e.g., the roots/all roots) of a (minimum-norm) polynomial representing a noise subspace of the IF signal and determining whether the root indicates (or the roots indicate) the free-space measurement. For instance, the processing circuitry 110 may determine roots of the minimum-norm vector $\mathbf{u}_{mn}$, derived from Equation 5. The roots of the polynomial may be found based on a z-transform of the minimum-norm vector $\mathbf{u}_{mn}$. The roots of the polynomial may indicate the harmonic spectrum of a signal source and may therefore efficiently reveal whether a frame indicates a free-space measurement. The processing circuitry 110 may, for instance, be configured to determine the one or more roots (e.g., the roots/all roots) of the polynomial based on a noise subspace of the IF signal. Thus, the roots of a polynomial approximating (representing) a noise subspace of the IF signal may be determined.

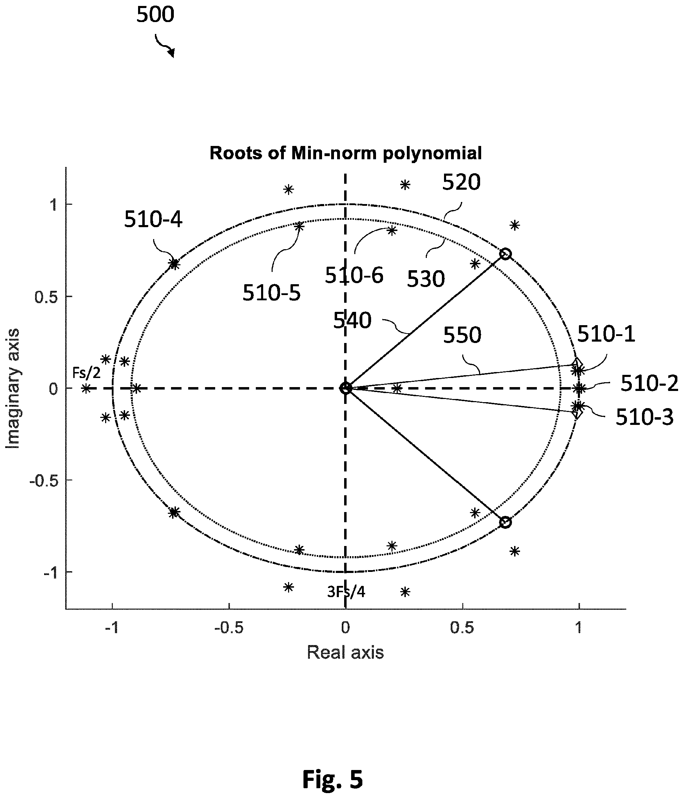

In order to decide whether the one or more roots indicate a free-space measurement, the root locus may be determined and analyzed. The root locus may indicate possible locations of the roots, where the locations may be the coordinates of the roots in a complex plane. The root loci and/or other characteristics of the roots may, for instance, be compared to predefined root loci and/or predefined characteristics which indicate a free-space measurement and which are, e.g., specific for a certain radar sensor type. The latter is illustrated by **Fig. 5** showing a complex plane 500 on which roots of an example of a minimum-norm vector, such as roots 510-1, 510-2, 510-3, 510-4, 510-5 and 510-6, of a certain frame of an example of an IF signal are marked. Generally, a frequency of a signal component (and thus a range of a corresponding target) may be indicated by an angular position (argument) of a root, and a signal strength may be indicated by a magnitude of a root.

A unity circle 520 and a noise threshold circle 530 are plotted in the complex plane 500. Further, a detection threshold 540 which is a section of the unity circle 520 and a crosstalk threshold 550 which is a smaller section of the unity circle 520 within the detection threshold 540. The noise threshold circle 530, the detection threshold 540 and the crosstalk threshold 550 may be determined, e.g., heuristically, and may be predefined for an operation of the radar sensor. The latter predefined thresholds may be adapted to application-specific requirements or assumptions made for a target application. This means that the threshold shown in Fig. 5 are a mere example. In other examples, some of the thresholds may be omitted such as the noise threshold circle 530 or may be chosen differently than in the example of Fig. 5, e.g., with a different section aperture.

For example, the processing circuitry 110 may be configured to determine whether the one or more roots indicate the free-space measurement by determining whether at least one of a real value, a complex value, an imaginary value, a phase and a magnitude of the one or more roots is within a predefined value range. Additionally or alternatively, the processing circuitry 110 may be configured to determine whether the one or more roots indicate the free-space measurement by determining whether a number of complex roots and/or a number of real roots of the one or more roots satisfy a predefined criteria and/or by determining whether the one or more roots are located at a predefined location. Additionally or alternatively, the processing circuitry 110 may be configured to determine whether the one or more roots indicate the free-space measurement by determining whether the roots exhibit at least one of a predefined root structure (e.g., whether the roots or a subset thereof are structured as at least one of a complex conjugate pair of roots, a single complex root and a single real-valued root), a predefined number of complex roots and a predefined number of real roots . For example, at least one of the predefined value range, a predefined number of complex or real roots, the root structure, and the predefined location may correspond to predefined free-space conditions.

For instance, in the example of Fig. 5, the roots which have a smaller magnitude than a radius of the noise threshold circle 530 or which are not close to the unity circle 520 may be discarded since they may be due to noise only. In other words, presence of a signal may be indicated by an undamped frequency tone (i.e., close to unity circle 520). Roots 510-5 and 510-6 may therefore be discarded. Roots lying beyond the unity circle 520 may have no physical meaning, since they may be abstract roots, merely a consequence of the analysis tool. Said roots may be ignored.

Further, roots which are outside the detection threshold 540 may be discarded since they may be due to targets or signal sources beyond the detection threshold. For instance, root 510-4 may be a distant target at about 1,4 meters which may be beyond the detection threshold of the radar sensor. Any roots which are located inside the detection threshold 540 and not inside the crosstalk threshold 550 may indicate near-range obstacles or targets and, hence, indicate a frame which is classified as not being a free-space frame.

In the example of Fig. 5, three roots 510-1, 510-2, 510-3 are located inside the crosstalk threshold 550 at an angle indicating a range of 5,8 centimetres. The roots 510-1, 510-2, 510-3 are doubled, i.e., each of said roots has an accompanying root with a similar locus. The root 510-2 is arranged close or on the real axis, i.e., is substantially real valued (a DC root). The roots 510-1 and 510-3 are arranged symmetrically with respect to the real axis on the unity circle 520, and together make a complex pair of roots corresponding to the real-valued harmonic signal. The roots 510-1 and 510-3 may belong to the same real-valued signal. Real-valued signals may be represented by two roots. An exclusion may be a DC signal, which is represented by a single real-valued root (such as root 510-2). A complex signal may have only one root (such as 510-1). For instance, the processing circuitry 110 may derive from at least one of the number of roots inside the detection threshold 540, the number of roots inside the crosstalk threshold 550, a root structure of the roots and alike whether a free-space measurement is present.

The processing circuitry 110 may therefore compare the characteristics of the roots with predefined characteristics, select relevant roots (and optionally discard irrelevant ones, e.g., such roots which are outside the detection threshold 540 or not close enough to the unity circle 520) and/or apply predefined constraints to the roots. In the example of Fig. 5, the presence of at least three roots 510-1, 510-2, 510-3 within the crosstalk threshold 550, the presence of at least one real-valued root 510-2 and the absence of roots which are inside the detection threshold 540 but outside the crosstalk threshold 550 indicates a free-space measurement with crosstalk.

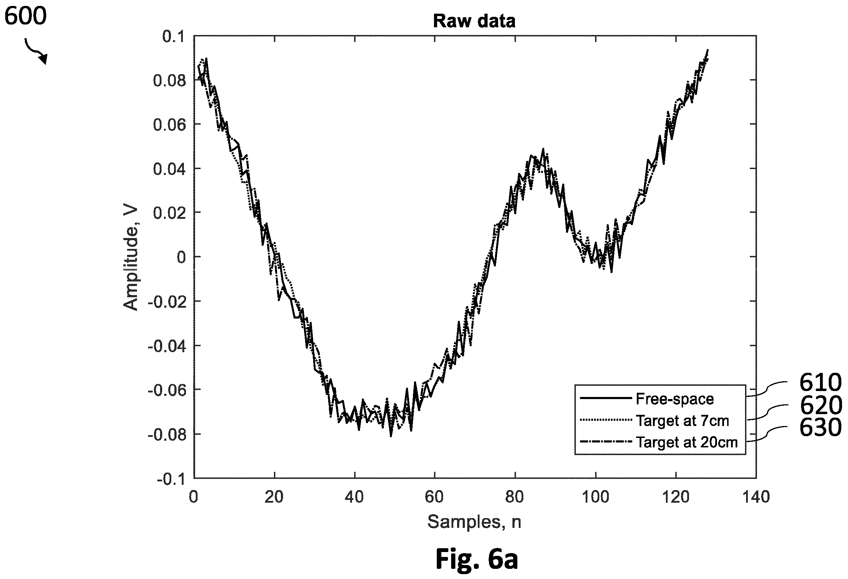

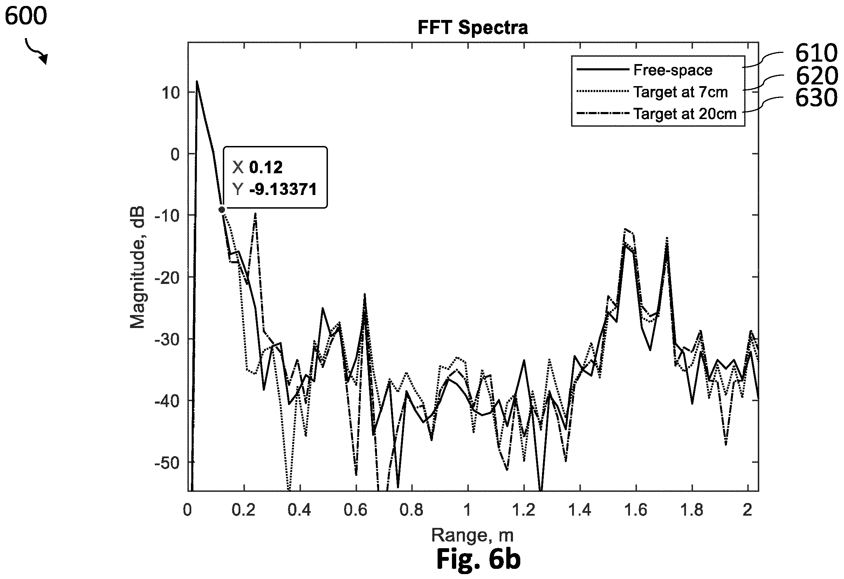

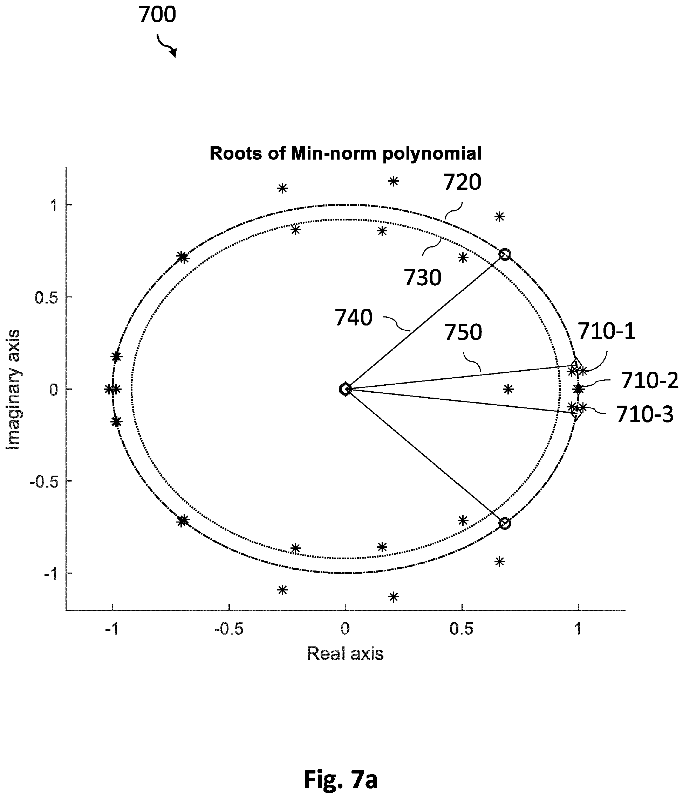

Examples of how different scenarios affect the determination of the undesired signal component are illustrated by Fig. 6a and Fig. 6b and Fig. 7a to Fig. 7c. **Fig. 6a** and **Fig. 6b** illustrate a diagram 600 of a time-domain representation and a range representation of an example of an IF signal of a radar sensor, respectively. The diagram 600 shows at least one frame of the IF signal indicating a free-space measurement 610, at least one frame of the IF signal indicating a first measurement 620 with a target at a range of 7 cm and at least one frame of the IF signal indicating a second measurement 630 with a target at a range of 20 cm. Neither data in time domain, as shown in Fig. 6a, nor data in frequency domain, as shown in Fig. 6b, clearly indicates features allowing a confident discrimination of free-space or near-range target scenarios. The curves of the signals' spectra (range representation) in case of the free-space measurement 610 and the first measurement 620 almost completely overlap. Similar results may be observed for any measurements with targets of a range below 12 cm. A minor peak may be spotted in the frequency domain (range representation) for the second measurement 630 with a target at 20 cm range.

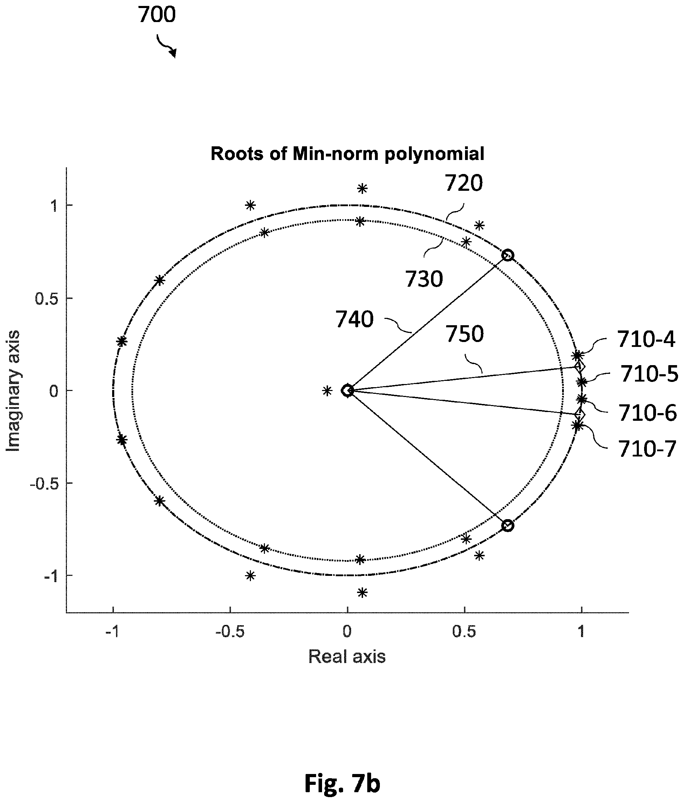

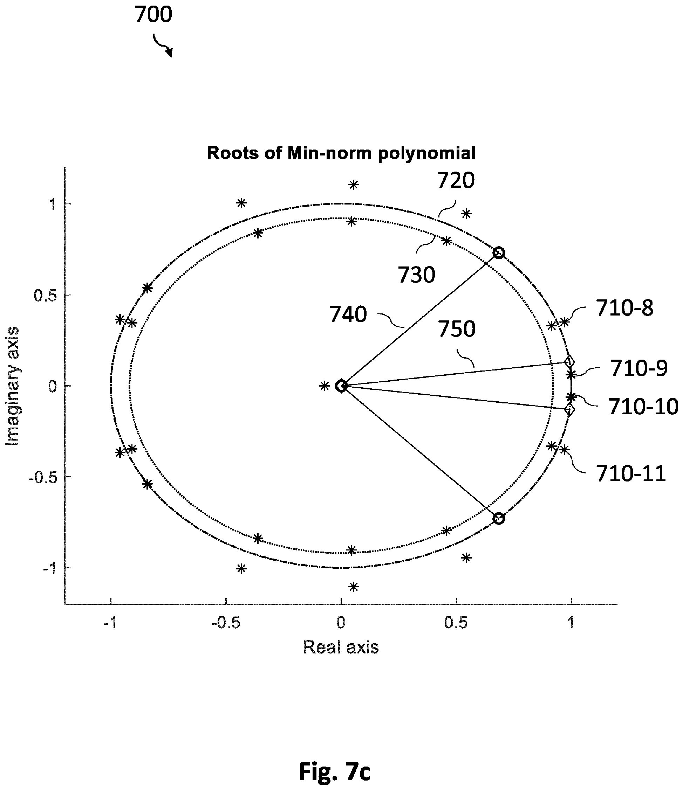

The harmonics-based approach of the apparatus 100 may in many cases increase the reliability of the determination of near-range targets and/or crosstalk. The latter is illustrated by **Fig. 7a** to **Fig. 7c** which show a complex plane 700 with examples of different root locations. Fig. 7a shows roots 710-1 to 710-3 corresponding to the free-space measurement 610 of Fig. 6a and Fig. 6b. Fig. 7b shows roots 710-4 to 710-7 corresponding to the first measurement 620 of Fig. 6a and Fig. 6b. Fig. 7c shows roots 710-8 to 710-11 corresponding to the second measurement 630 of Fig. 6a and Fig. 6b. The roots 710-1 to 710-11 may correspond to the roots of a polynomial of a noise subspace of the respective measurements 610, 620, 630. For instance, the processing circuitry 110 may determine the roots 710-1 to 710-11 based on a minimum-norm root method as explained above. Similarly to Fig. 5, a unity circle 720, a noise threshold circle 730, a detection threshold 740 and a crosstalk threshold 750 are used as predefined constraints to analyze the roots 710-1 to 710-11. For instance, all roots outside the detection threshold 740 and roots inside the noise threshold circle 730 may be discarded.

In Fig. 7a, a real-valued root 710-2 is present, and the roots 710-1 and 710-3 are two near-origin (near real axis) complex-valued roots within the detection threshold 740, thus, indicating that the frame corresponds to a free-space measurement being solely affected by crosstalk in the near range. In Fig. 7b, no real-valued (DC) root is present, instead four near-origin complex-valued roots 710-4 to 710-7 are present. This root signature may indicate that a near-range target is present in the current frame, e.g., a target at 7 cm, thus the root signature may indicate that the present frame is not a free-space measurement. In Fig. 7c, no real-valued (DC) root is present, instead two near-origin complex-valued roots 710-9 and 710-10 as well as two distant complex-valued roots 710-8 and 710-11 are present. The latter root signature may indicate a near-range target, here at 20 cm. For example, the outer roots 710-4, 710-7 in Fig. 7b and 710-8 and 710-11 in Fig. 7c may exhibit a phase or angle which make them occupy a median position between the true loci of the crosstalk and target roots. This may be an indication that the current frame is not a free-space measurement. The inner roots 710-5 and 710-6 in Fig. 7b and 710-9 and 710-10 in Fig. 7c may correspond to higher-order harmonics of the polynomial.

Consequently, the harmonics-based approach of the apparatus 100, e.g., using minimum-norm root method, may improve a differentiation between free-space frame (e.g., by detecting DC and low-frequency sine-wave components of the IF signal) and frames with a near range target/obstacle (e.g., by detecting either two low-frequency sine-wave components or low-frequency and medium frequency sine-wave components of the IF signal). Further, the apparatus 100 may detect free-space measurements automatically without supervision, e.g., using the minimum-norm root method, whereas conventional approaches may need manual adaption of the scenario, indication whether a free-space measurement is provided or other not objectively measurable parameters to be input by a user. Thus, the apparatus 100 may simplify the implementation of crosstalk cancellation since no input from a user of the apparatus 100 is required. The predefined characteristics for identifying the root signature (e.g., leakage roots loci) may be definable by the solution provider, e.g., may be measured on the factory side for different sensors or radar sensor casings. Compared to conventional approaches, the apparatus 100 may also be applicable to radar sensors with a cover (e.g., when the radar sensor module is installed inside the product, such as a fridge, robot, car, etc.). The apparatus 100 may automatically adapt to the casing presence (and additionally to leakage) and may still provide confident detection for near-range targets.

The processing circuitry 110 may further use a frame indicating a free-space measurement for further processing in order to determine the undesired signal component. For example, the processing circuitry 110 may be configured to, in response to determining that the at least one frame indicates a free-space measurement, determine whether a predefined number of frames of the IF signal indicate a respective free-space measurement and, in response to determining that a predefined number of frames of the IF signal indicate the respective free-space measurement, determine the undesired signal component based on the predefined number of frames. For example, the frames with free-space measurements may be collected (stored in memory) over a certain time period, e.g., during calibration of the apparatus 100. For instance, a number of 32 frames may be sufficient to determine the undesired signal component with high accuracy. The processing circuitry 110 may further be configured to, in a calibration mode of the apparatus 100 and in response to determining that the at least one frame does not indicate a free-space measurement, discard the at least one frame. Compared to conventional approaches, the apparatus 100 may get along with few number of frames which may decrease the computational effort and the time for calibration of the radar sensor. Even an interrupted free-space measurement may be possible since non valid in-between frames may be discarded.

The processing circuitry 110 is, in some examples, configured to determine the undesired signal component by averaging over the predefined number of frames. For instance, the processing circuitry 110 may determine a crosstalk (leakage) or near-range obstacle profile based on the frames. Averaging may be performed with additional weighting (of samples) of the frames, for instance. Alternatively, any function, e.g., a fitting function, may be used to combine the frames to an updated profile of the undesired signal component. For instance, the processing circuitry 110 may determine the undesired signal component by applying at least one of a Savitzky-Golay algorithm and polynomial fitting to the frames. The Savitzky-Golay algorithm may be a type of least-squares polynomial fitting that uses a sliding window and a set of precomputed coefficients to estimate the underlying signal. The algorithm may work by fitting a polynomial of a given order to a subset of the data points of the IF signal within a sliding window, and then computing the value of the polynomial at the center point of the window. The coefficients of the polynomial may be precomputed using a least-squares approach and optimized for smoothing and/or differentiation depending on the chosen parameters. The resulting estimates may be used to replace the original noisy data points, resulting in a smoother signal. Alternatively, it may include computing the derivative of the polynomial at the center point of the window and optimizing the precomputed coefficients of the polynomial for minimizing the error in the estimated derivatives, resulting in a more accurate estimate of the underlying signal derivative. The use of the Savitzky-Golay algorithm may allow a removal of the crosstalk while keeping distant targets (like 1,4 m away) intact.

The processing circuitry 110 may, for instance, be configured to average over respective range representations of the predefined number of frames. For instance, the processing circuity 110 may determine the respective range representations by, e.g., applying an FFT to each of the frames. The range representation may be an arrangement of the IF signal into range bins. Samples of the respective range representations may then, for instance, be superimposed to determine the undesired signal component. In some examples, the processing circuitry 110 is configured to average over all range bins of the respective range representations. The latter may enable a crosstalk cancellation over all range bins such that no discontinuity in the range spectrum or residual leakage sidelobes occur.

The processing circuitry 110 is further configured to determine a calibrated signal having a reduced contribution from the undesired signal component based on the undesired signal component and the IF signal. Such calibrated signal may then be used for performing a radar task, e.g., ranging, motion detection or alike. For instance, the processing circuitry 110 may be configured to determine at least one near-range target in the field of view of the radar sensor based on the calibrated signal. Since the apparatus 100 may more precisely determine the undesired signal component without any fitting errors or other distortion of the near-range components of the IF signal, the resulting calibrated signal may make near-range targets detectable.

The processing circuitry 110 may, for example, be configured to determine the calibrated signal by at least one of attenuating, subtracting and filtering the undesired signal component in the IF signal. In other words, a leakage and/or near-range obstacle profile may be attenuated in the IF signal. For instance, the profile may be applied to further (subsequent) frames of the IF signal. The processing circuitry 110 may therefore be configured to determine the calibrated signal by at least one of attenuating, removing, filtering and suppressing the undesired signal component in at least one subsequent frame of the IF signal, i.e., subsequent to the free-space frames used for determining the undesired signal component.

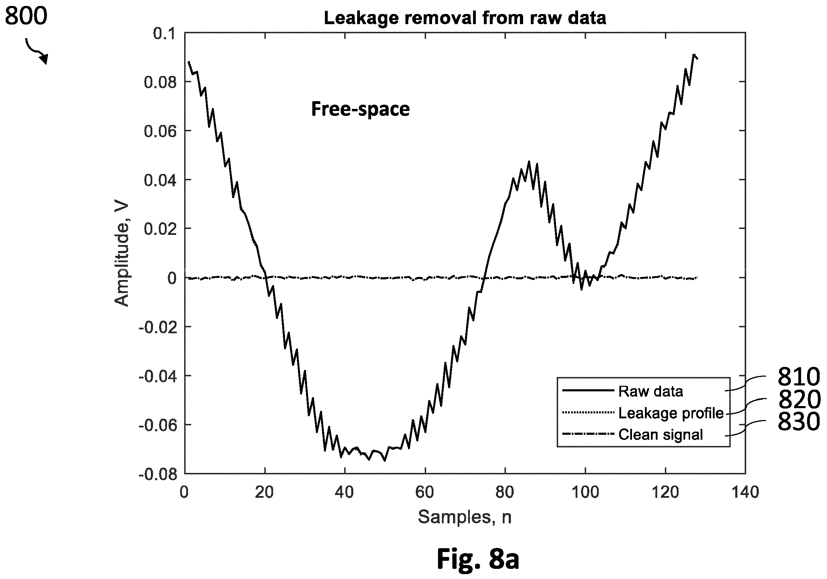

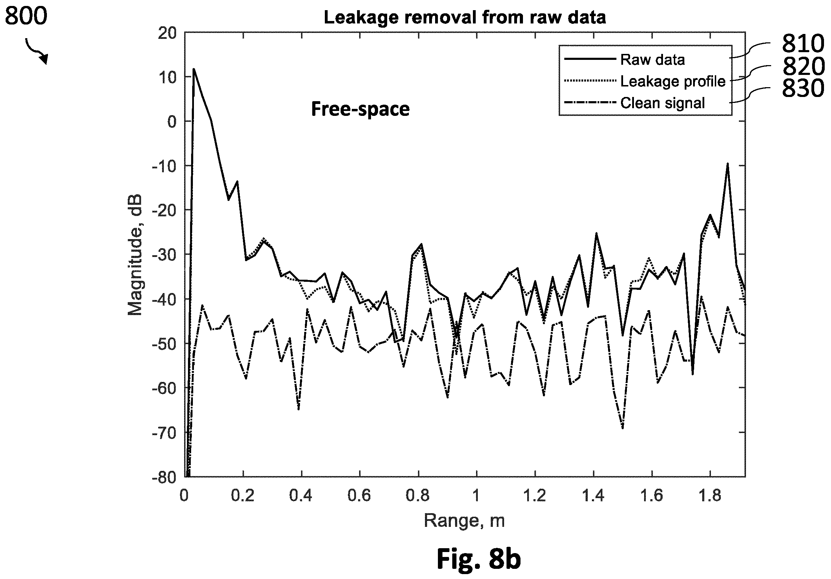

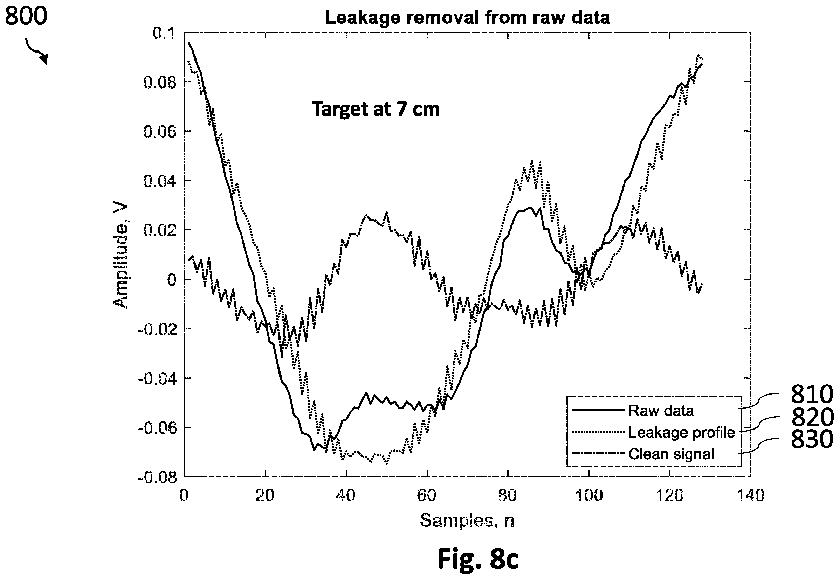

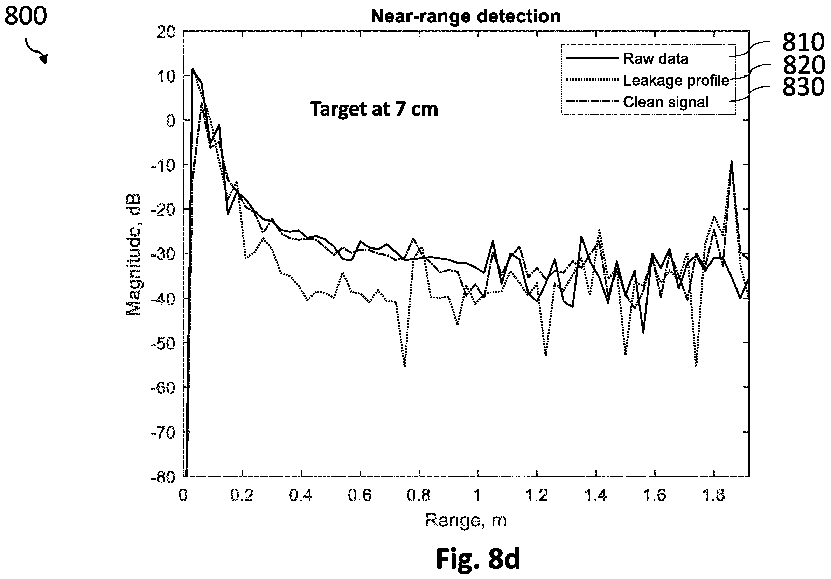

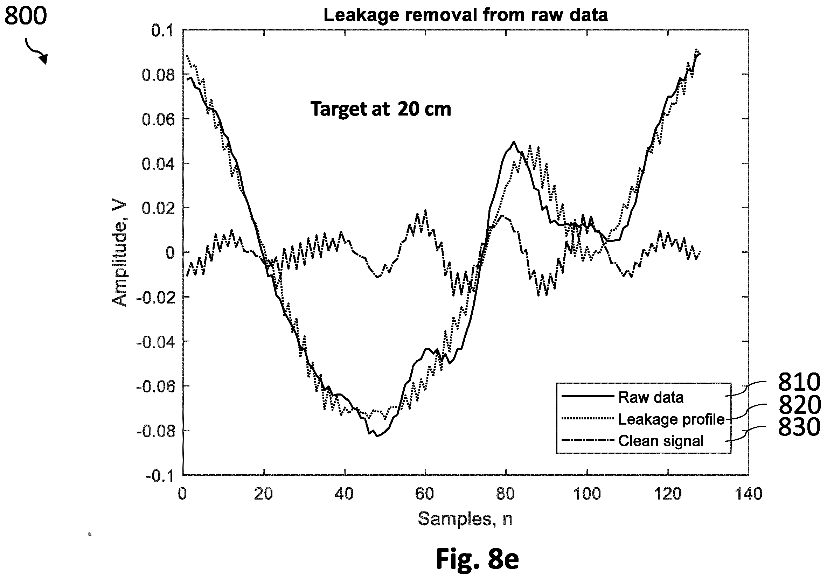

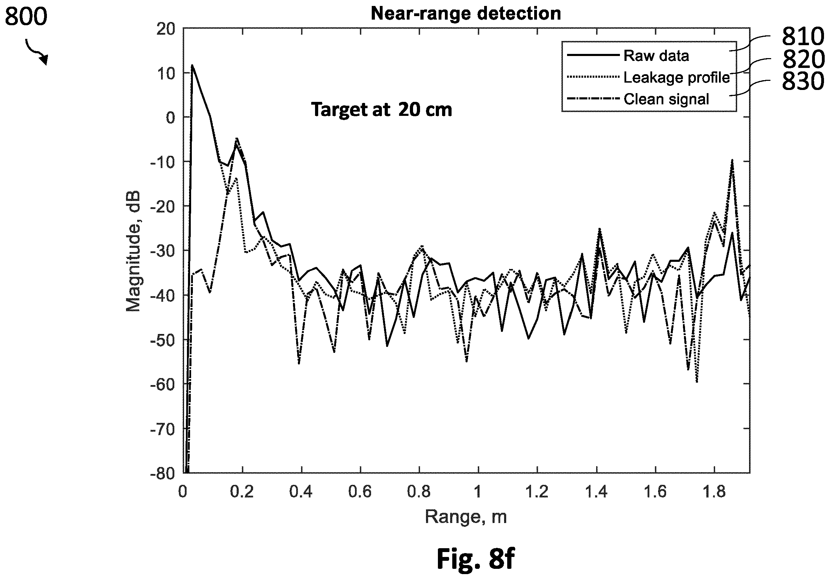

Examples of a calibrated signal 830 are illustrated by **Fig. 8a** to **Fig. 8f.** Fig. 8a to Fig. 8f illustrate diagrams 800 of the calibrated signal 830 (clean signal) as time-domain representation and as corresponding range representation for the scenarios of a free-space measurement (Fig. 8a, Fig. 8b), a target at a range of 7 cm (Fig. 8c, Fig. 8d) and a target at a range of 20 cm (Fig. 8e, Fig. 8f). The diagrams 800 further show an example of an IF signal 810 (raw data) which is to be calibrated and an undesired signal component 820 (leakage profile) of the IF signal 810. The calibrated signal 830 may be determined by subtraction of the undesired signal component 820 from the IF signal 810. The undesired signal component 820 may be determined as described above, such as by the apparatus 100. Fig. 8a and Fig. 8b show that the calibrated signal 830 does not comprise any undesired crosstalk, thus, no false targets or other distortions appear. Fig. 8c to Fig. 8f show that near-range targets at 7 and 20 cm are visible in the calibrated signal 830. Thus, the crosstalk cancellation does not interfere with the detection of near-range targets.

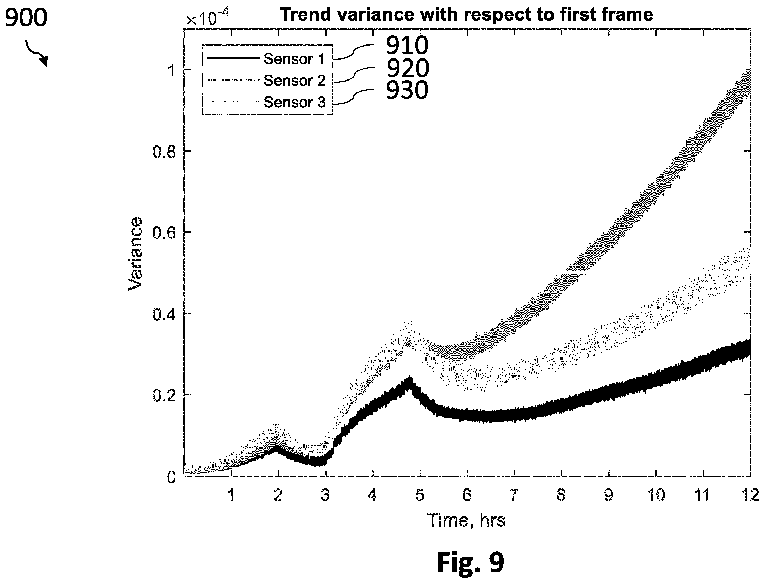

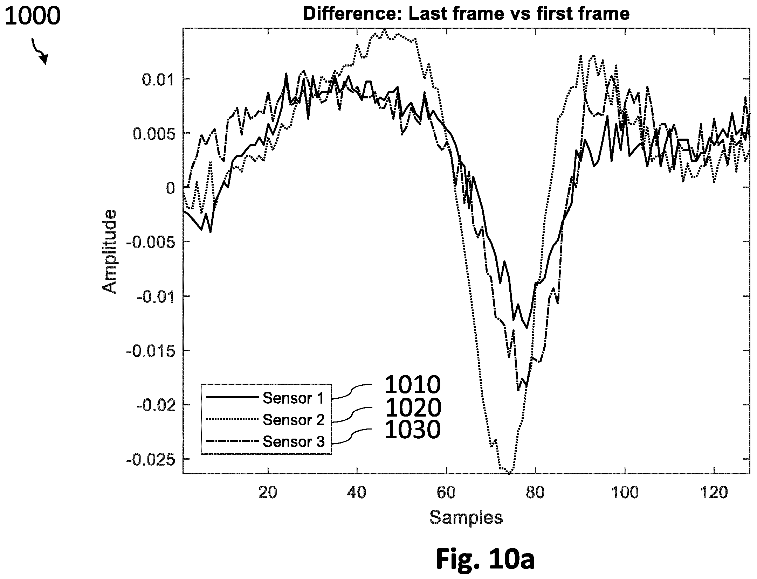

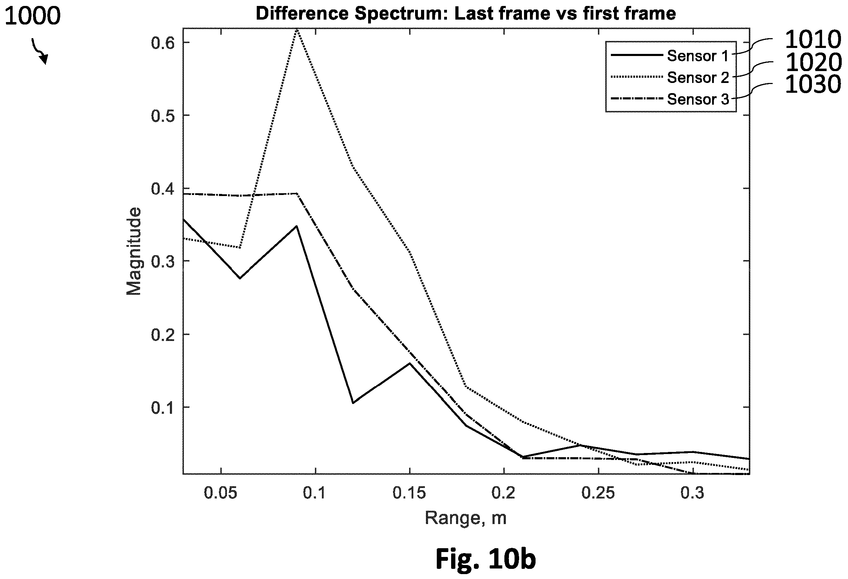

A further concern addressed by the apparatus 100 may be the long-term use of the apparatus 100 without a decline of the accuracy of the crosstalk/near-range obstacle profile. Fig. 9 illustrates a diagram 900 of an example of a first drift 910 of an undesired signal component over time of a first sensor, a second drift 920 of an undesired signal component over time of a second sensor and a third drift 930 of an undesired signal component over time of a third sensor. Further, **Fig. 10a** and **Fig. 10b** illustrate a diagram 1000 of a time-domain representation and a range representation of a calibrated signal 1010, 1020 and 1030 (without updating) for a free-space measurement with the first, second and third sensor of Fig. 9, respectively. Fig. 10a and Fig. 10b show that, if not tracked, removal of the originally found (e.g., during calibration) leakage profile from a current frame of an IF signal may result in a low-frequency signal falsely indicating a near-range target.

Therefore, the apparatus 100 may provide, in some examples, a continuous update of the undesired signal component. For instance, in a calibration mode of the apparatus 100, an initial profile may be determined, e.g., based on more sophisticated methods such as a root-based method. During an operation the apparatus 100 may update the profile, e.g., based on less computationally heavy methods, for example conventional fitting or minimum-norm method.

For example, the processing circuitry 110 may be configured to determine a harmonic spectrum of the calibrated signal, determine whether the calibrated signal comprises a further free-space measurement based on the harmonic spectrum of the calibrated signal and, in response to determining that the calibrated signal comprises a further free-space measurement, update the determined undesired signal component based on the further free-space measurement. That is, free-space measurements that are detected, e.g., in an operation mode of the apparatus 100, may be used for updating the profile. For a light-weighted computation, the processing circuitry 110 may be configured to determine the harmonic spectrum of the calibrated signal based on a minimum-norm method. In contrast to conventional approaches where updating of the profile is cumbersome, the apparatus 100 may enable a regular updating, e.g., based on each free-space frame of the IF signal. The updating may be performed by, e.g., averaging over the newly and previously identified free-space frames and optionally by applying a weighting to the frames, e.g., in accordance with respective occurrence times and a time-dependent drift model.

The apparatus 100 may enable a free-space/near-range target case discrimination using super-resolution minimum-norm root method. Data collected for the free-space measurements may be used for the generation of a leakage profile calculation and for removal of the leakage from the radar sensor's raw data. This technique may also be successfully applied to remove a near-range obstacle (e.g., a radar casing) from the radar sensor's field of view while still maintaining the ability to confidently detect near-range (e.g., less than 40 cm) targets.

**Fig. 11** illustrates a radar system 1100. The radar system 1100 comprises an apparatus 1110 as described herein, such as apparatus 100, and a radar sensor 1120. The radar sensor 1120 is configured to emit a radio frequency signal into the field of view of the radar sensor 1120 and generate the IF signal based on a reflection of the radio frequency signal.

Although the apparatus 1110 and the radar sensor 1120 are depicted as separate blocks in Fig. 11, in other examples, the apparatus 1110 may in part or in entirety be included in the radar sensor 1120, which thus correspondingly includes all or part of the processing circuitry (e.g., processing circuitry 110) of the apparatus 1110.

In case the apparatus 1110 is only partially included in the radar sensor 1120, the radar system 1100 may include distributed processing circuitry carrying out respective parts of the processing steps, e.g., in the form of first processing (sub-) circuitry included in the radar sensor 1120, and second processing (sub-) circuitry external to the sensor and in communication with the first processing circuitry through interface circuitry (e.g., interface circuitry 120), for instance, for exchange of data between the first and the second processing circuitry.

In case the apparatus 1110 is integrated in the radar sensor 1120, the processing circuitry and the radar sensor 1120 may be jointly integrated in a single semiconductor chip, or in more than one semi-conductor chip.

In case the apparatus 1110 is not included in the radar sensor 1120, the processing circuitry may take the form of circuitry external to the radar sensor 1120 and may be communicatively coupled therewith through interface circuitry.

More details and aspects of the radar system 1100 are explained in connection with the proposed technique or one or more examples described above, e.g., with reference to Fig. 1. The radar system 1100 may comprise one or more additional optional features corresponding to one or more aspects of the proposed technique, or one or more examples described above.

The radar system 1100 may enable a free-space/near-range target case discrimination using decomposition-based methods, such as super-resolution minimum-norm root method. Data collected for the free-space measurements may be used for the generation of a leakage profile calculation and for removal of the leakage from the radar sensor's raw data. This technique may also be successfully applied to remove a near-range obstacle (e.g., a radar casing) from the radar sensor's field of view while still maintaining the ability to confidently detect near-range (e.g., less than 40 cm) targets.

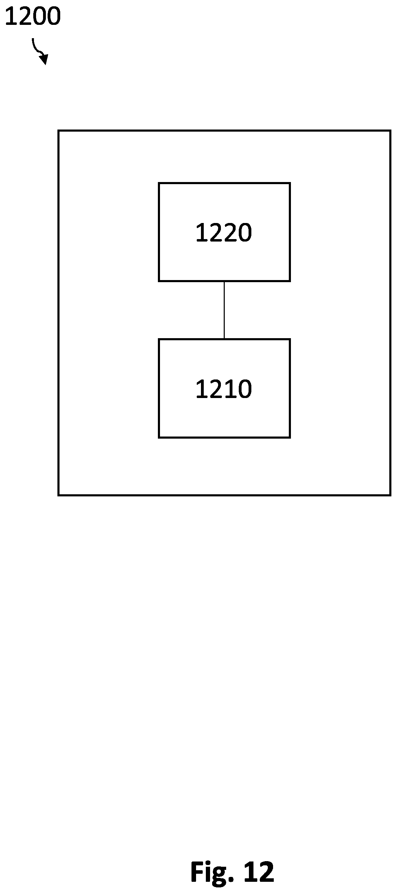

**Fig. 12** illustrates an electronic device 1200. The electronic device 1200 comprises a radar system 1210 as described herein, such as radar system 1100, and control circuitry 1220 configured to control an operation of the electronic device based on the calibrated signal. For instance, the radar system 1210 may be configured to determine at least one near-range target in the field of view of the radar sensor based on the calibrated signal. The control circuitry 1220 may be configured to control the operation of the electronic device based on the determined at least one near-range target.

The control circuitry 1220 may be a single dedicated processor, a single shared processor, or a plurality of individual processors, some of which or all of which may be shared, a digital signal processor (DSP) hardware, an application specific integrated circuit (ASIC) or a field programmable gate array (FPGA). The control circuitry 1220 may optionally be coupled to, e.g., read only memory (ROM) for storing software, random access memory (RAM) and/or non-volatile memory.

The electronic device 1200 may be any device with a sensing, e.g., ranging, function. The electronic device 1200 may be, e.g., a consumer device. The electronic device 1200 may be, e.g., be a fridge. The control circuitry 1220 may control the operation of the electronic device 1200, e.g., by activating or deactivating a certain function of the electronic device 1200 based on the determined calibrated signal, e.g., a certain function may be activated if it is determined that a user of the electronic device 1200 is present. For instance, the control circuitry 1220 may, if it is determined that a user is close, automatically control a light source to be activated, e.g., (in case of the fridge) such that the user may look into the fridge through a transparent window without opening a door of the fridge.

The electronic device 1200 may enable a free-space/near-range target case discrimination using decomposition-based method, such as super-resolution minimum-norm root method. Data collected for the free-space measurements may be used for the generation of a leakage profile calculation and for removal of the leakage from the radar sensor's raw data. This technique may also be successfully applied to remove a near-range obstacle (e.g., a radar casing) from the radar sensor's field of view while still maintaining the ability to confidently detect near-range (e.g., less than 40 cm) targets.

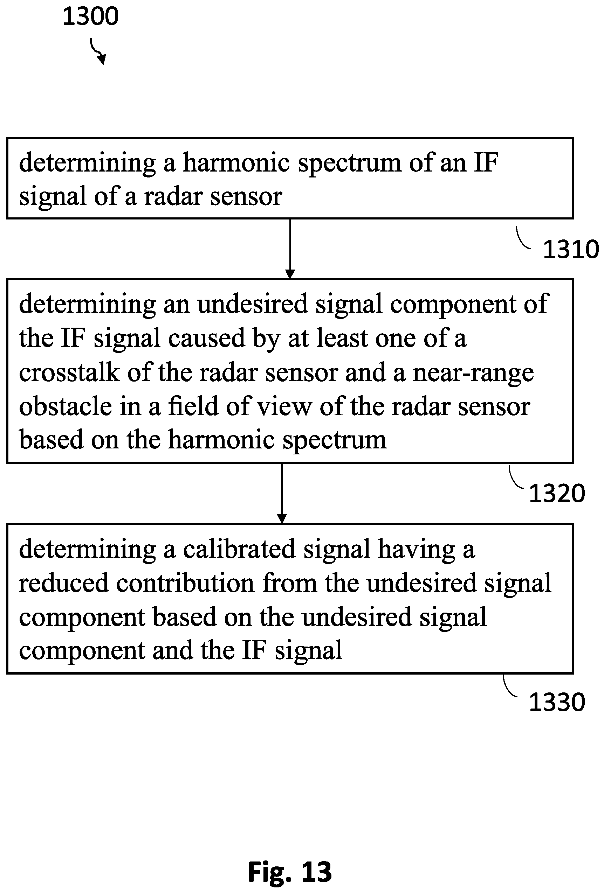

**Fig. 13** illustrates a flowchart of a method 1300. The method 1300 is performed by an apparatus (100) as described herein. The method 1300 comprises determining 1310 a harmonic spectrum of an intermediate frequency, IF, signal of a radar sensor. The method 1300 further comprises determining 1320 an undesired signal component of the IF signal caused by at least one of a crosstalk of the radar sensor and a near-range obstacle in a field of view of the radar sensor based on the harmonic spectrum and determining 1330 a calibrated signal having a reduced contribution from the undesired signal component based on the undesired signal component and the IF signal.

More details and aspects of the method 1300 are explained in connection with the proposed technique or one or more examples described above, e.g., with reference to Fig. 1. The method 1300 may comprise one or more additional optional features corresponding to one or more aspects of the proposed technique, or one or more examples described above.

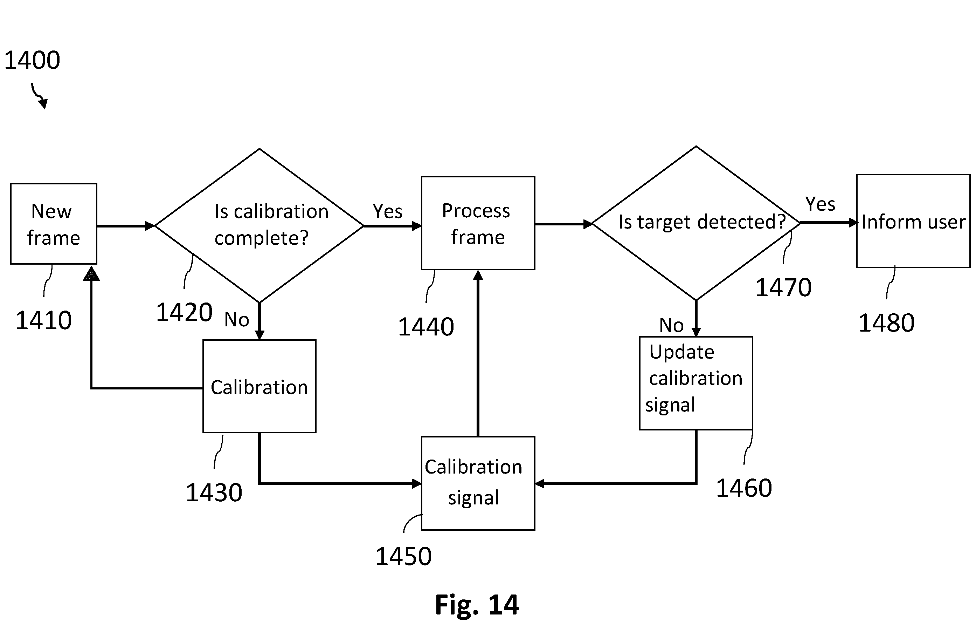

**Fig. 14** illustrates a flowchart of another example of a method 1400. The method 1400 may, for instance, be performed by an apparatus as described herein, such as apparatus 100. The method 1400 may, for instance, represent an operation mode of the apparatus 100.

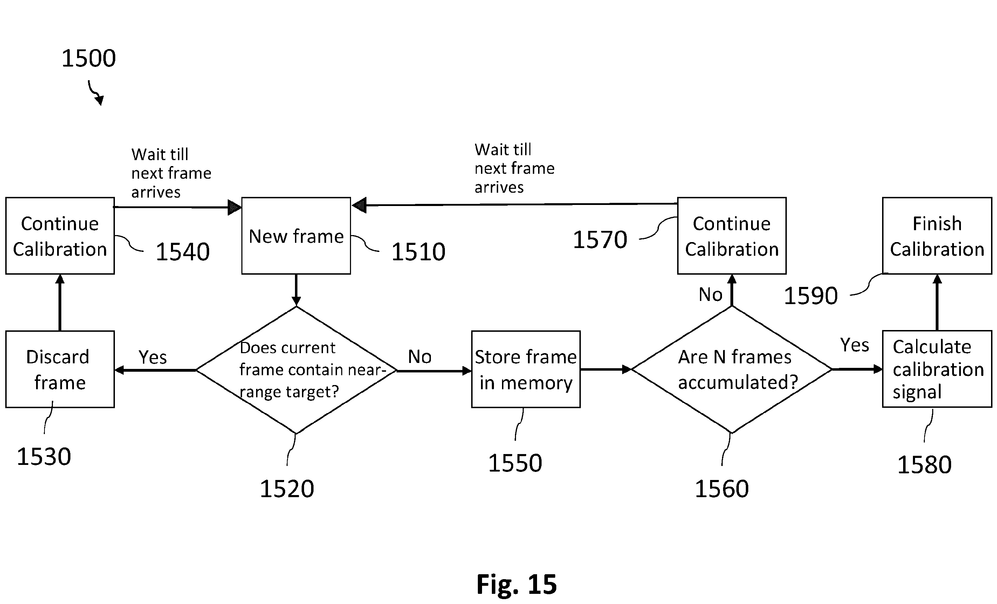

The method 1400 comprises receiving and/or determining 1410 a frame of an IF signal of a radar sensor and determining 1420 whether a calibration of the apparatus is complete. If not, the method 1400 continues with calibrating 1430 the apparatus which may be a further external or integrated (sub-) method, such as the method described with reference to Fig. 15. For instance, calibrating 1430 may comprise determining whether the frame indicates a free-space measurement (whether a target is present in the current frame or not) and, if not, storing said frame in memory. Calibrating 1430 may further comprise determining whether a predefined number of frames N of the IF signal indicate a respective free-space measurement and, in response to determining that a predefined number of frames N of the IF signal indicate the respective free-space measurement, determining the undesired signal component based on the predefined number of frames. For instance, the frames may be accumulated and after a predefined number of N free-space frames is reached, these are used to calculate the leakage profile. For instance, the undesired signal component may be determined by averaging over the predefined number of frames.

The method 1400 further comprises receiving and/or determining 1450 the undesired signal component (e.g., a leakage profile) derived from calibration 1430 and/or updating (1460). If it is determined that the calibration is complete, the method 1400 comprises processing 1440 the frame. For instance, processing 1440 may comprise determining a calibrated signal having a reduced contribution from the undesired signal component based on the undesired signal component and the IF signal. For example, the calibrated signal may be determined by attenuating the undesired signal component in the frame of the IF signal (which may be at least one frame subsequent to the frame which is used to determine the undesired signal component).

The calibrated (residual) signal may be further processed after leakage profile removal or attenuation from the frame raw data, e.g., using a minimum-norm algorithm. For instance, processing 1440 may comprise determining a harmonic spectrum of the calibrated signal. The method 1400 further continues with determining 1470 whether the calibrated signal comprises a further free-space measurement (e.g., based on a minimum-norm method) based on the harmonic spectrum of the calibrated signal (determining whether a target is detected). In response to determining that the calibrated signal comprises a further free-space measurement, the method 1400 continues with updating 1460 the determined undesired signal component based on the further free-space measurement. Thus, if no target is detected in the current frame, said frame may be used to update the leakage profile (the leakage profile may change over time). Processing 1440 may further comprise, e.g., determining at least one near-range target in the field of view of the radar sensor based on the calibrated signal.

The method 1400 further comprises outputting 1480 a signal to a user based on the determined calibrated signal.

**Fig. 15** illustrates a flowchart of another example of a method 1500. The method 1500 may, for instance, be performed by an apparatus as described herein, such as apparatus 100. The method 1500 may, for instance, represent a calibration mode of the apparatus 100. In some examples, the apparatus may, for instance, perform methods 1400 and 1500 in a calibration mode and an operation mode, respectively.

The method 1500 comprises receiving and/or determining 1510 a frame of an IF signal of a radar sensor and determining 1520 whether said frame indicates a free-space measurement (comprises a near-range target). For instance, determining 1520 may comprise determining a harmonic spectrum of the frame, e.g., based on the minimum-norm root method. If it is determined that the frame does not indicate a free-space measurement, the method 1500 continues with discarding 1530 the frame and maintaining 1540 the calibration mode. If it is determined that the frame does indicate a free-space measurement, the method 1500 continues with storing 1550 said frame in memory. The method 1500 continues with determining 1560 whether a predefined number N of frames indicate a (respective) free-space measurement (whether N frames are accumulated). If not, the method 1500 continues with maintaining 1570 the calibration mode. If so, the method 1500 continues with determining 1580 an undesired signal component of the IF signal caused by at least one of a crosstalk of the radar sensor and a near-range obstacle in a field of view of the radar sensor based on the harmonic spectrum, e.g., by averaging over the predefined number of frames. The method 1500 may then continue with finishing 1590 the calibration mode, thus, starting an operation mode of the apparatus.

The methods 1400 and 1500 may enable a free-space/near-range target case discrimination based on noise eigenvectors of the IF signal, e.g., using super-resolution minimum-norm root method. Data collected for the free-space measurements may be used for the generation of a leakage profile calculation and for removal of the leakage from the radar sensor's raw data. This technique may also be successfully applied to remove a near-range obstacle (e.g., a radar casing) from the radar sensor's field of view while still maintaining the ability to confidently detect near-range (e.g., less than 40 cm) targets. In calibration mode, more accurate harmonics analysis may be applied such as a minimum-norm root method whereas in operation mode, a faster harmonics analysis may be applied such as minimum-norm method. The collected free-space measurements in operation mode may be used for continuously updating the leakage profile.

## Claims

1.  An apparatus (100), comprising processing circuitry (110) configured to:

    determine a harmonic spectrum of an intermediate frequency, IF, signal of a radar sensor;
    determine an undesired signal component of the IF signal caused by at least one of a crosstalk of the radar sensor and a near-range obstacle in a field of view of the radar sensor based on the harmonic spectrum; and
    determine a calibrated signal having a reduced contribution from the undesired signal component based on the undesired signal component and the IF signal.

2.  The apparatus (100) of claim 1, wherein the processing circuitry (110) is configured to determine the calibrated signal by at least one of attenuating, subtracting and filtering the undesired signal component in the IF signal.

3.  The apparatus (100) of any one of the previous claims, wherein the processing circuitry (110) is configured to determine the harmonic spectrum based on a harmonic model of the IF signal.

4.  The apparatus (100) of any one of the previous claims, wherein the processing circuitry (110) is configured to determine the harmonic spectrum by partitioning the IF signal into a signal subspace and a noise subspace.

5.  The apparatus (100) of any one of the previous claims, wherein the processing circuitry (110) is configured to determine the harmonic spectrum based on at least one of an eigendecomposition of an autocorrelation matrix of the IF signal and a singular value decomposition of a data matrix of the IF signal.

6.  The apparatus (100) of any one of the previous claims, wherein the processing circuitry (110) is configured to determine the harmonic spectrum based on at least one of a minimum-norm method, a minimum-norm root method, a multiple signal classification method, a multiple signal classification root method, an eigenvalue method, a rooted eigenvalue method, a Pisarenko harmonic decomposition method, a rooted Pisarenko harmonic decomposition method, and an estimation of signal parameters via rotational invariance technique.

7. The apparatus (100) of any one of the previous claims, wherein the processing circuitry (110) is configured to, in a calibration mode of the apparatus (100), determine the harmonic spectrum of the IF signal based on a minimum-norm root method.

8. The apparatus (100) of any one of the previous claims, wherein the processing circuitry (110) is configured to:

   determine whether at least one frame of the IF signal indicates a free-space measurement based on the harmonic spectrum; and
   determine the undesired signal component based on the free-space measurement.

9. The apparatus (100) of claim 8, wherein the processing circuitry (110) is configured to determine whether the at least one frame indicates a free-space measurement based by:

   determining one or more roots of a polynomial representing a noise subspace of the IF signal; and
   determining whether the root indicates the free-space measurement.

10. The apparatus (100) of claim 9, wherein the processing circuitry (110) is configured to determine whether the one or more roots indicate the free-space measurement by determining whether at least one of a complex value, a real value and an imaginary value of the one or more roots is within a predefined value range.

11. The apparatus (100) of any one of the previous claims, wherein the processing circuitry (110) is configured to:

   determine a harmonic spectrum of the calibrated signal;
   determine whether the calibrated signal comprises a further free-space measurement based on the harmonic spectrum of the calibrated signal; and
   in response to determining that the calibrated signal comprises a further free-space measurement, update the determined undesired signal component based on the further free-space measurement.

12. The apparatus (100) of any one of the previous claims, wherein the processing circuitry (110) is configured to determine at least one near-range target in the field of view of the radar sensor based on the calibrated signal.

13. A radar system (1100), comprising:

   the apparatus (1110) of any one of claims 1 to 12; and
   a radar sensor (1120) configured to emit a radio frequency signal into a field of view and generate the IF signal based on a reflection of the radio frequency signal.

14. An electronic device (1200), comprising:

   the radar system (1200) of claim 13; and
   control circuitry (1210) configured to control an operation of the electronic device (1200) based on the calibrated signal.

15. A computer-implemented method (1300) that, when executed by the processing circuitry (110) of an apparatus (100) according to any of claims 1 to 12, implements the steps of:

   determining (1310) a harmonic spectrum of an intermediate frequency, IF, signal of a radar sensor;
   determining (1320) an undesired signal component of the IF signal caused by at least one of a crosstalk of the radar sensor and a near-range obstacle in a field of view of the radar sensor based on the harmonic spectrum; and
   determining (1330) a calibrated signal having a reduced contribution from the undesired signal component based on the undesired signal component and the IF signal.

**EP 4 451 001 B1**

**Patentansprüche**

1. Vorrichtung (100), die eine Verarbeitungsschaltungsanordnung (110) umfasst, die ausgelegt ist zum:

Bestimmen eines harmonischen Spektrums eines Zwischenfrequenz- bzw. ZF-Signals eines Radarsensors;
Bestimmen einer unerwünschten Signalkomponente des ZF-Signals, die durch ein Übersprechen des Radarsensors und/oder ein Nahbereichshindernis in einem Sichtfeld des Radarsensors verursacht wird, basierend auf dem harmonischen Spektrum; und
Bestimmen eines kalibrierten Signals mit einem reduzierten Beitrag von der unerwünschten Signalkomponente basierend auf der unerwünschten Signalkomponente und dem ZF-Signal.

2. Vorrichtung (100) nach Anspruch 1, wobei die Verarbeitungsschaltungsanordnung (110) dazu ausgelegt ist, das kalibrierte Signal durch Dämpfen, Subtrahieren und/oder Filtern der unerwünschten Signalkomponente in dem ZF-Signal zu bestimmen.

3. Vorrichtung (100) nach einem der vorhergehenden Ansprüche, wobei die Verarbeitungsschaltungsanordnung (110) dazu ausgelegt ist, das harmonische Spektrum basierend auf einem harmonischen Modell des ZF-Signals zu bestimmen.

4. Vorrichtung (100) nach einem der vorhergehenden Ansprüche, wobei die Verarbeitungsschaltungsanordnung (110) dazu ausgelegt ist, das harmonische Spektrum durch Partitionieren des ZF-Signals in einen Signalunterraum und einen Rauschunterraum zu bestimmen.

5. Vorrichtung (100) nach einem der vorhergehenden Ansprüche, wobei die Verarbeitungsschaltungsanordnung (110) dazu ausgelegt ist, das harmonische Spektrum basierend auf einer Eigenzerlegung einer Autokorrelationsmatrix des ZF-Signals und/oder einer Singulärwertzerlegung einer Datenmatrix des ZF-Signals zu bestimmen.

6. Vorrichtung (100) nach einem der vorhergehenden Ansprüche, wobei die Verarbeitungsschaltungsanordnung (110) dazu ausgelegt ist, das harmonische Spektrum basierend auf einem Minimalnorm-Verfahren und/oder einem Minimalnorm-Wurzelverfahren und/oder einem Mehrfachsignal-Klassifizierungsverfahren und/oder einem Mehrfachsignal-Klassifizierungswurzelverfahren und/oder einem Eigenwertverfahren und/oder einem wurzelbasierten Eigenwertverfahren und/oder einem Pisarenko-Verfahren zur harmonischen Zerlegung und/oder einem wurzelbasierten Pisarenko-Verfahren zur harmonischen Zerlegung und/oder einer Schätzung von Signalparametern über eine Rotationsinvarianztechnik zu bestimmen.

7. Vorrichtung (100) nach einem der vorhergehenden Ansprüche, wobei die Verarbeitungsschaltungsanordnung (110) dazu ausgelegt ist, in einem Kalibrierungsmodus der Vorrichtung (100) das harmonische Spektrum des ZF-Signals basierend auf einem Minimalnorm-Wurzelverfahren zu bestimmen.

8. Vorrichtung (100) nach einem der vorhergehenden Ansprüche, wobei die Verarbeitungsschaltungsanordnung (110) ausgelegt ist zum:

Bestimmen, ob mindestens ein Frame des ZF-Signals eine Freiraummessung basierend auf dem harmonischen Spektrum angibt; und
Bestimmen der unerwünschten Signalkomponente basierend auf der Freiraummessung.

9. Vorrichtung (100) nach Anspruch 8, wobei die Verarbeitungsschaltungsanordnung (110) ausgelegt ist zum Bestimmen, ob der mindestens eine Frame eine Freiraummessung angibt, basierend auf:

Bestimmen einer oder mehrerer Wurzeln eines Polynoms, das einen Rauschunterraum des ZF-Signals repräsentiert; und
Bestimmen, ob die Wurzel die Freiraummessung angibt.

10. Vorrichtung (100) nach Anspruch 9, wobei die Verarbeitungsschaltungsanordnung (110) dazu ausgelegt ist, zu bestimmen, ob die eine oder die mehreren Wurzeln die Freiraummessung angeben, indem bestimmt wird, ob ein komplexer Wert, ein realer Wert und/oder ein imaginärer Wert der einen oder der mehreren Wurzeln innerhalb eines vordefinierten Wertebereichs liegt.

**11.** Vorrichtung (100) nach einem der vorhergehenden Ansprüche, wobei die Verarbeitungsschaltungsanordnung (110) ausgelegt ist zum:

Bestimmen eines harmonischen Spektrums des kalibrierten Signals;
Bestimmen, ob das kalibrierte Signal eine weitere Freiraummessung umfasst, basierend auf dem harmonischen Spektrum des kalibrierten Signals; und
als Reaktion auf das Bestimmen, dass das kalibrierte Signal eine weitere Freiraummessung umfasst, Aktualisieren der bestimmten unerwünschten Signalkomponente basierend auf der weiteren Freiraummessung.

**12.** Vorrichtung (100) nach einem der vorhergehenden Ansprüche, wobei die Verarbeitungsschaltungsanordnung (110) dazu ausgelegt ist, mindestens ein Nahbereichsziel in dem Sichtfeld des Radarsensors basierend auf dem kalibrierten Signal zu bestimmen.

**13.** Radarsystem (1100), umfassend:

die Vorrichtung (1110) nach einem der Ansprüche 1 bis 12; und
einen Radarsensor (1120), der dazu ausgelegt ist, ein Hochfrequenzsignal in ein Sichtfeld zu emittieren und das ZF-Signal basierend auf einer Reflexion des Hochfrequenzsignals zu erzeugen.

**14.** Elektronische Vorrichtung (1200), umfassend:

das Radarsystem (1200) nach Anspruch 13; und
eine Steuerschaltungsanordnung (1210), die ausgelegt ist zum Steuern eines Betriebs der elektronischen Vorrichtung (1200) basierend auf dem kalibrierten Signal.

**15.** Computerimplementiertes Verfahren (1300), das, wenn es durch die Verarbeitungsschaltungsanordnung (110) einer Vorrichtung (100) nach einem der Ansprüche 1 bis 12 ausgeführt wird, die folgenden Schritte implementiert:

Bestimmen (1310) eines harmonischen Spektrums eines Zwischenfrequenz- bzw. ZF-Signals eines Radarsensors;
Bestimmen (1320) einer unerwünschten Signalkomponente des ZF-Signals, die durch ein Übersprechen des Radarsensors und/oder ein Nahbereichshindernis in einem Sichtfeld des Radarsensors verursacht wird, basierend auf dem harmonischen Spektrum; und
Bestimmen (1330) eines kalibrierten Signals mit einem reduzierten Beitrag von der unerwünschten Signalkomponente basierend auf der unerwünschten Signalkomponente und dem ZF-Signal.

**Revendications**

**1.** Appareil (100), comprenant un ensemble de circuits de traitement (110) configurés pour :

déterminer un spectre harmonique d'un signal de fréquence intermédiaire, IF, d'un capteur radar ;
déterminer une composante de signal indésirable du signal IF causée par au moins une diaphonie entre le capteur radar et un obstacle proche dans un champ de vision du capteur radar sur la base du spectre harmonique ; et
déterminer un signal étalonné ayant une contribution réduite à partir de la composante de signal indésirable sur la base de la composante de signal indésirable et du signal IF.

**2.** Appareil (100) selon la revendication 1, dans lequel l'ensemble de circuits de traitement (110) est configuré pour déterminer le signal étalonné par au moins l'une des opérations d'atténuation, de soustraction et de filtration de la composante de signal indésirable dans le signal IF.

**3.** Appareil (100) selon l'une quelconque des revendications précédentes, dans lequel l'ensemble de circuits de traitement (110) est configuré pour déterminer le spectre harmonique sur la base d'un modèle harmonique du signal IF.

**4.** Appareil (100) selon l'une quelconque des revendications précédentes, dans lequel l'ensemble de circuits de traitement (110) est configuré pour déterminer le spectre harmonique en subdivisant le signal IF en un sous-espace de signal et un sous-espace de bruit.

5. Appareil (100) selon l'une quelconque des revendications précédentes, dans lequel l'ensemble de circuits de traitement (110) est configuré pour déterminer le spectre harmonique sur la base d'au moins l'une d'une composition propre d'une matrice d'autocorrélation du signal IF et d'une décomposition en valeurs singulières d'une matrice de données du signal IF.

6. Appareil (100) selon l'une quelconque des revendications précédentes, dans lequel l'ensemble de circuits de traitement (110) est configuré pour déterminer le spectre harmonique sur la base d'au moins une méthode parmi une méthode de norme minimale, une méthode de racine de norme minimale, une méthode de classification de signaux multiples, une méthode de racine de classification de signaux multiples, une méthode des valeurs propres, une méthode des valeurs propres avec racines, une méthode de décomposition harmonique de Pisarenko, une méthode de décomposition harmonique de Pisarenko avec racines, et une estimation des paramètres de signal par la technique d'invariance de rotation.

7. Appareil (100) selon l'une quelconque des revendications précédentes, dans lequel l'ensemble de circuits de traitement (110) est configuré pour, dans un mode d'étalonnage de l'appareil (100), déterminer le spectre harmonique du signal IF sur la base d'une méthode de racine de norme minimale.

8. Appareil (100) selon l'une quelconque des revendications précédentes, dans lequel l'ensemble de circuits de traitement (110) est configuré pour :

déterminer si au moins une trame du signal IF indique une mesure d'espace libre sur la base du spectre harmonique ; et
déterminer la composante de signal indésirable sur la base de la mesure d'espace libre.

9. Appareil (100) selon la revendication 8, dans lequel l'ensemble de circuits de traitement (110) est configuré pour déterminer si l'au moins une trame indique une mesure d'espace libre sur la base de :

la détermination d'une ou plusieurs racines d'un polynôme représentant un sous-espace de bruit du signal IF ; et
la détermination du fait que la racine indique ou on la mesure d'espace libre.

10. Appareil (100) selon la revendication 9, dans lequel l'ensemble de circuits de traitement (110) est configuré pour déterminer si la ou les racines indiquent la mesure d'espace libre en déterminant si au moins l'une d'une valeur complexe, d'une valeur réelle et d'une valeur imaginaire de la ou des racines se trouve dans une plage de valeurs prédéfinie.

11. Appareil (100) selon l'une quelconque des revendications précédentes, dans lequel l'ensemble de circuits de traitement (110) est configuré pour :

déterminer un spectre harmonique du signal étalonné ;
déterminer si le signal étalonné comprend une mesure d'espace libre supplémentaire sur la base du spectre harmonique du signal étalonné ; et
en réponse à la détermination du fait que le signal étalonné comprend une mesure d'espace libre supplémentaire, mettre à jour la composante de signal indésirable déterminée sur la base de la mesure d'espace libre supplémentaire.

12. Appareil (100) selon l'une quelconque des revendications précédentes, dans lequel l'ensemble de circuits de traitement (110) est configuré pour déterminer au moins une cible proche de la portée dans le champ de vision du capteur radar sur la base du signal étalonné.

13. Système radar (1100), comprenant :

l'appareil (1110) selon l'une quelconque des revendications 1 à 12 ; et
un capteur radar (1120) configuré pour émettre un signal radiofréquence dans un champ de vision et générer le signal IF sur la base d'une réflexion du signal radiofréquence.

14. Dispositif électronique (1200), comprenant :

le système radar (1200) selon la revendication 13 ; et
un ensemble de circuits de commande (1210) configuré pour commander un fonctionnement du dispositif électronique (1200) sur la base du signal étalonné.

15. Procédé (1300) mis en œuvre par ordinateur qui, lorsqu'il est exécuté par l'ensemble de circuits de traitement (110) d'un appareil (100) selon l'une quelconque des revendications 1 à 12, met en œuvre les étapes de :

détermination (1310) d'un spectre harmonique d'un signal de fréquence intermédiaire, IF, d'un capteur radar ;
détermination (1320) d'une composante de signal indésirable du signal IF causée par au moins une diaphonie entre le capteur radar et un obstacle proche dans un champ de vision du capteur radar sur la base du spectre harmonique ; et
détermination (1330) d'un signal étalonné ayant une contribution réduite à partir de la composante de signal indésirable sur la base de la composante de signal indésirable et du signal IF.

100

**Fig. 1**

Fig. 2a

Prior Art

**Fig. 2b**

Prior Art

EP 4 451 001 B1

300

signal eigenvector

320

orthogonal

noise
eigenvectors

310-1

310-2

| $\sigma_W^2$ | $\sigma_W^2$ | $\sigma_W^2$ | $\sigma_W^2$ | $\sigma_W^2$ | $\sigma_W^2$ | $\sigma_W^2$ |
|---|---|---|---|---|---|---|
| $\sigma_W^2$ | $\sigma_W^2$ | $\sigma_W^2$ | $\sigma_W^2$ | $\sigma_W^2$ | $\sigma_W^2$ | $\sigma_W^2$ |
| $\sigma_W^2$ | $\sigma_W^2$ | $\sigma_W^2$ | $\sigma_W^2$ | $\sigma_W^2$ | $\sigma_W^2$ | $\sigma_W^2$ |
| $\sigma_W^2$ | $\sigma_W^2$ | $\sigma_W^2$ | $P^2+\sigma_W^2$ | $\sigma_W^2$ | $\sigma_W^2$ | $\sigma_W^2$ |
| $\sigma_W^2$ | $\sigma_W^2$ | $\sigma_W^2$ | $\sigma_W^2$ | $\sigma_W^2$ | $\sigma_W^2$ | $\sigma_W^2$ |
| $\sigma_W^2$ | $\sigma_W^2$ | $\sigma_W^2$ | $\sigma_W^2$ | $\sigma_W^2$ | $\sigma_W^2$ | $\sigma_W^2$ |
| $\sigma_W^2$ | $\sigma_W^2$ | $\sigma_W^2$ | $\sigma_W^2$ | $\sigma_W^2$ | $\sigma_W^2$ | $\sigma_W^2$ |

**Fig. 3**

400

| | | | | | | |
|---|---|---|---|---|---|---|
| $\sigma_W^2$ | $\sigma_W^2$ | $\sigma_W^2$ | 0 | $\sigma_W^2$ | $\sigma_W^2$ | $\sigma_W^2$ |
| $\sigma_W^2$ | $\sigma_W^2$ | $\sigma_W^2$ | 0 | $\sigma_W^2$ | $\sigma_W^2$ | $\sigma_W^2$ |
| $\sigma_W^2$ | $\sigma_W^2$ | $\sigma_W^2$ | 0 | $\sigma_W^2$ | $\sigma_W^2$ | $\sigma_W^2$ |
| $\sigma_W^2$ | $\sigma_W^2$ | $\sigma_W^2$ | 0 | $\sigma_W^2$ | $\sigma_W^2$ | $\sigma_W^2$ |
| $\sigma_W^2$ | $\sigma_W^2$ | $\sigma_W^2$ | 0 | $\sigma_W^2$ | $\sigma_W^2$ | $\sigma_W^2$ |
| $\sigma_W^2$ | $\sigma_W^2$ | $\sigma_W^2$ | 0 | $\sigma_W^2$ | $\sigma_W^2$ | $\sigma_W^2$ |
| $\sigma_W^2$ | $\sigma_W^2$ | $\sigma_W^2$ | 0 | $\sigma_W^2$ | $\sigma_W^2$ | $\sigma_W^2$ |

**Fig. 4**

**Fig. 5**

600

**Fig. 6a**

**Fig. 6b**

EP 4 451 001 B1

Fig. 7a

**Fig. 7b**

Fig. 7c

**800**

**Leakage removal from raw data**

**Free-space**

Raw data — 810
Leakage profile — 820
Clean signal — 830

**Fig. 8a**

EP 4 451 001 B1

Fig. 8b

800

**Leakage removal from raw data**

Target at 7 cm

810
820
830

Raw data
Leakage profile
Clean signal

**Fig. 8c**

EP 4 451 001 B1

800

Fig. 8d

**800**

Leakage removal from raw data

Target at 20 cm

810 Raw data
820 Leakage profile
830 Clean signal

**Fig. 8e**

EP 4 451 001 B1

Fig. 8f

**900**

Trend variance with respect to first frame

$\times 10^{-4}$

Sensor 1 — 910
Sensor 2 — 920
Sensor 3 — 930

Variance

Time, hrs

**Fig. 9**

EP 4 451 001 B1

1000

Difference: Last frame vs first frame

Amplitude

Samples

1010
1020
1030

Sensor 1
Sensor 2
Sensor 3

**Fig. 10a**

1000

**Fig. 10b**

EP 4 451 001 B1

1100

1120

1110

**Fig. 11**

1200

1220

1210

**Fig. 12**

1300

determining a harmonic spectrum of an IF signal of a radar sensor

— 1310

determining an undesired signal component of the IF signal caused by at least one of a crosstalk of the radar sensor and a near-range obstacle in a field of view of the radar sensor based on the harmonic spectrum

— 1320

determining a calibrated signal having a reduced contribution from the undesired signal component based on the undesired signal component and the IF signal

— 1330

**Fig. 13**

**Fig. 14**

1400

1410 New frame

1420 Is calibration complete?

Yes

1440 Process frame

Is target detected? 1470

Yes

1480 Inform user

No

1430 Calibration

No

1460 Update calibration signal

1450 Calibration signal

EP 4 451 001 B1

43

**Fig. 15**

**EP 4 451 001 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022196795 A1
- US 2021072345 A1
- US 2021373127 A1